# EUROPEAN PATENT APPLICATION

(11) **EP 4 645 076 A1**
(43) Date of publication of application: **05.11.2025**
(21) Application number: 24766363.6
(22) Date of filing: 01.03.2024
(51) Int. Cl.: G06F 9/451

(54) **METHOD FOR SWITCHING APPLICATION PROGRAM AND ELECTRONIC DEVICE**

(30) Priority: 07.03.2023 CN 202310248384
(71) Applicant: Huawei Technologies Co., Ltd., Shenzhen, Guangdong 518129 (CN)
(72) Inventor: SUN, Kang, Shenzhen, Guangdong 518129 (CN)
(74) Representative: MERH-IP Matias Erny Reichl Hoffmann Patentanwälte PartG mbB
(86) International application number: PCT/CN2024/079640
(87) International publication number: WO 2024/183647

(57) **Abstract**

An application switching method is provided. An electronic device may obtain, through division from a display area of a screen, two parts that do not block each other. The two parts may be respectively used as an application desktop and a DOCK. The application desktop may be used to display a user interface of an application in the DOCK. The application displayed on the application desktop and the DOCK form a split-screen combination. The application displayed on the application desktop is adapted to the application desktop for display, so that displayed content of the application does not block the DOCK. Therefore, the DOCK can be resident on the screen of the electronic device for display, to help a user select another application from the DOCK at any time for switching. This improves application switching efficiency.

## Description

This application claims priority to Chinese Patent Application No. 202310248384.8, filed with the China National Intellectual Property Administration on March 7, 2023, and entitled "APPLICATION SWITCHING METHOD AND ELECTRONIC DEVICE", which is incorporated herein by reference in its entirety.

### TECHNICAL FIELD

This application relates to the field of electronic technologies, and in particular, to an application switching method and an electronic device.

### BACKGROUND

With rapid development of electronic software technologies, there are an increasing quantity of applications on electronic devices such as smartphones. Various applications provide a user with various functions and services. However, a large quantity of applications also bring difficulty to the user in searching for and switching to an application.

### SUMMARY

Embodiments of this application provide a method for starting an application and an electronic device, so that a dock bar (DOCK) can be resident on a screen for display. This helps improve application switching efficiency of a user.

According to a first aspect, an embodiment of this application provides a method. The method may include: An electronic device detects a user operation of opening a third application, and in response to this, the electronic device displays a first split-screen combination on a screen. The first split-screen combination includes a first application and a dock bar DOCK, the first application is displayed in a first split-screen window, the DOCK is displayed in a second split-screen window, the first split-screen window and the second split-screen window do not block each other, and the DOCK includes a plurality of applications. The electronic device detects a user operation of opening the first application by a user, and in response to this, the electronic device displays the first application in full screen on the screen. Then, the electronic device detects the user operation of opening the third application again, and in response to this, the electronic device displays the first split-screen combination on the screen again.

The third application may be an application that is mentioned in a subsequent embodiment and that is used to start split-screen combination, for example, "Smart driving".

According to the method in the first aspect, after the first split-screen combination (for example, a split-screen combination including "Map" and the DOCK) is started, the split-screen combination is not split because the first application (for example, "Map") in the split-screen combination is not opened in full screen. The user can still continue to use the previous split-screen combination, which is more convenient.

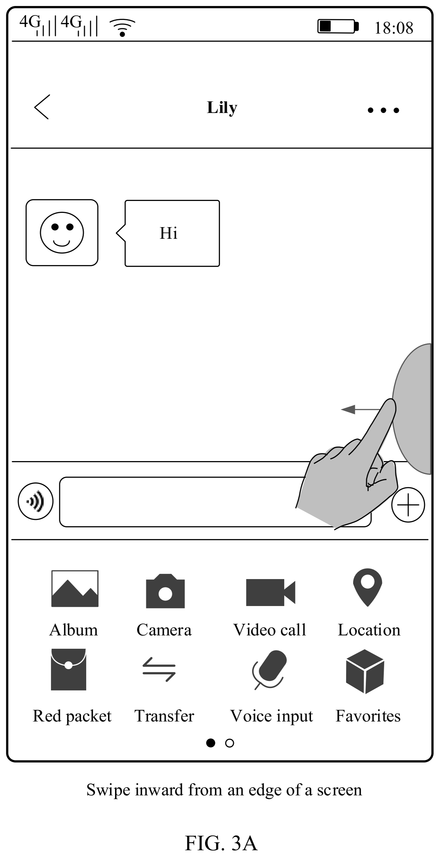

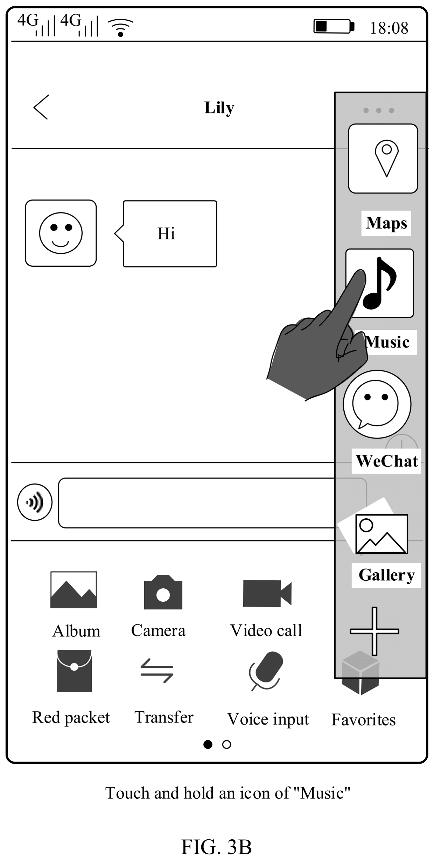

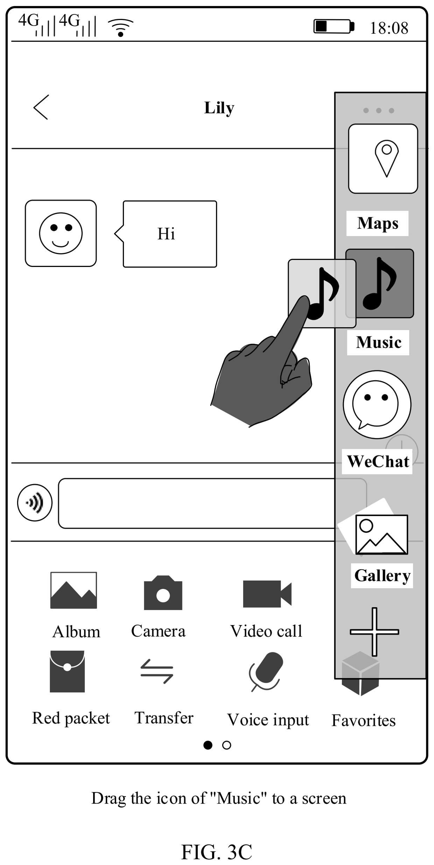

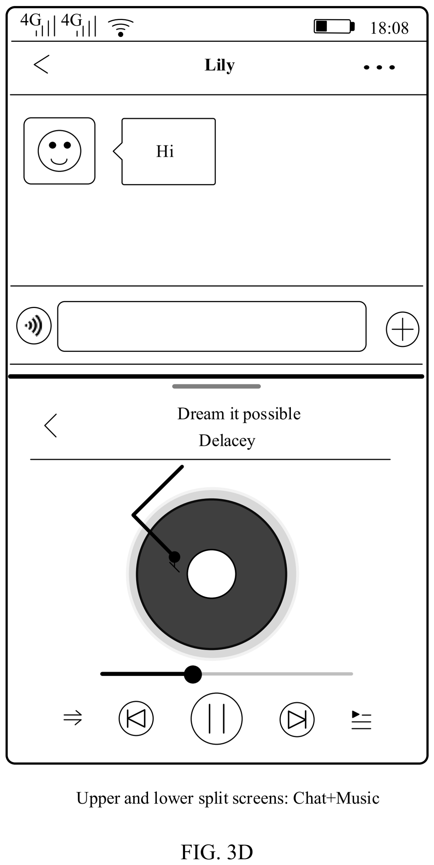

In addition, according to the method in the first aspect, the DOCK in the split-screen combination is not blocked by the first application displayed in the first split-screen window. Therefore, the DOCK may be always visible to the user, so that the user can select an application from the DOCK for application switching. In addition, an existing entry for starting an application is reused, so that the application switching method provided in this embodiment of this application can implement one-tap screen splitting. For example, screen splitting is triggered in a one-tap manner via a desktop icon, a floating bubble, or a message notification center, and the user does not need to first open a split-screen application, and then open the DOCK to select another split-screen application and drag the another split-screen application to the screen, as shown in FIG. 3A to FIG. 3D. In addition, the existing entry for starting an application is reused, so that the entry does not need to be customized at a framework layer. This reduces development work of this part.

With reference to the first aspect, in some embodiments, when the electronic device displays the first split-screen combination on the screen, the method further includes: The electronic device stores the first split-screen combination as a recent split-screen combination. Storing the recent split-screen combination may further include: storing a split screen ratio used for the recent split-screen combination. During specific implementation, the storing may include: storing in a process variable of the third application.

An implementation of storing may include: The electronic device may store a split-screen configuration (for example, a split-screen combination and the split screen ratio) of the recent split-screen combination in the process variable of the third application. For example, the split-screen configuration is stored in a process variable of a main interface of "Smart driving". In this way, when various entry processes (for example, a desktop application of "Smart driving", the message notification center, and the floating bubble) on a split screen start, the main interface of "Smart driving" is opened, that is, a main interface process is started, and a split-screen configuration stored in a process variable of the main interface process is read. Regardless of which entry manner is used by the user to start screen splitting again, a recently used split screen can be opened.

With reference to the first aspect, in some embodiments, the method may further include: The electronic device detects a user operation of opening a second application in the DOCK, and in response to this, the electronic device displays a user interface of the second application in the first split-screen window. In this case, the electronic device may further store a second split-screen combination as the recent split-screen combination, and the second split-screen combination includes the second application and the DOCK.

The second application is also displayed without blocking the DOCK. Same as the first application, a user interface of the second application displayed in the first split-screen window may also be adapted to an application desktop, that is, support screen splitting. A layout resource used by the second application is updated based on a current split screen ratio, and is different from a layout resource used when the second application is displayed in full screen. In this way, the user interface of the second application displayed in the first split-screen window does not block the DOCK, so that the user can select to switch to another application in the DOCK when using the second application.

With reference to the first aspect, in some embodiments, when the electronic device detects the user operation of opening the third application, the first application is a recently used application, and the recent split-screen combination is not stored in the electronic device. In other words, when the recent split-screen combination is not stored, the recently used application and the DOCK may be used to form a split-screen combination.

With reference to the first aspect, in some embodiments, when the electronic device detects the user operation of opening the third application again, the first application is not the recently used application.

That the first application is not the recently used application may specifically include: After the electronic device displays the first application in full screen on the screen, and before the electronic device detects the user operation of opening the third application again, the electronic device further displays a fourth application in full screen on the screen.

In other words, when the recent split-screen combination is stored, and the user operation of opening the third application is detected again, the electronic device does not use the recently used application (namely, the fourth application) and the DOCK to form the split-screen combination, but returns to the previously opened first allocation combination (namely, the recent split-screen combination).

With reference to the first aspect, in some embodiments, the first application has a first layout resource and a second layout resource, the first layout resource is configured based on a size of the first split-screen window, and the second layout resource is configured based on a size of the screen.

When the first application is displayed in the first split-screen window, a layout resource used by the first application is the first layout resource. When the first application is displayed in full screen on the screen, the layout resource used by the first application is the second layout resource.

In other words, the first application may support split-screen display based on the first layout resource, and may also support full-screen display based on the second layout resource.

With reference to the first aspect, in some embodiments, the second application also has a layout resource configured based on the first split-screen window. In other words, the second application may support split-screen display.

With reference to the first aspect, in some embodiments, the user operation of opening the third application may include: tapping a desktop icon of the third application, tapping a floating bubble of the third application displayed on the screen, or tapping a notification in the message notification center indicating that the third application is running. In this way, the user may open the allocation combination via a plurality of entries.

With reference to the first aspect, in some embodiments, that the electronic device displays the first split-screen combination on the screen may specifically include: The third application transfers, to an application framework layer, the first split-screen combination and a split screen ratio used for the first split-screen combination. The application framework layer forms a split screen based on the split screen ratio used for the first split-screen combination, and sends a first screen configuration update notification to the first application in the first split-screen combination, where the first screen configuration update notification carries the size of the first split-screen window. The first application feeds back the first layout resource to the application framework layer based on the first screen configuration update notification, where the first layout resource is a layout resource obtained based on the size of the first split-screen window, and is different from the second layout resource used when the first application is displayed in full screen. The application framework layer displays a user interface of the first application in the first split-screen window based on the first layout resource.

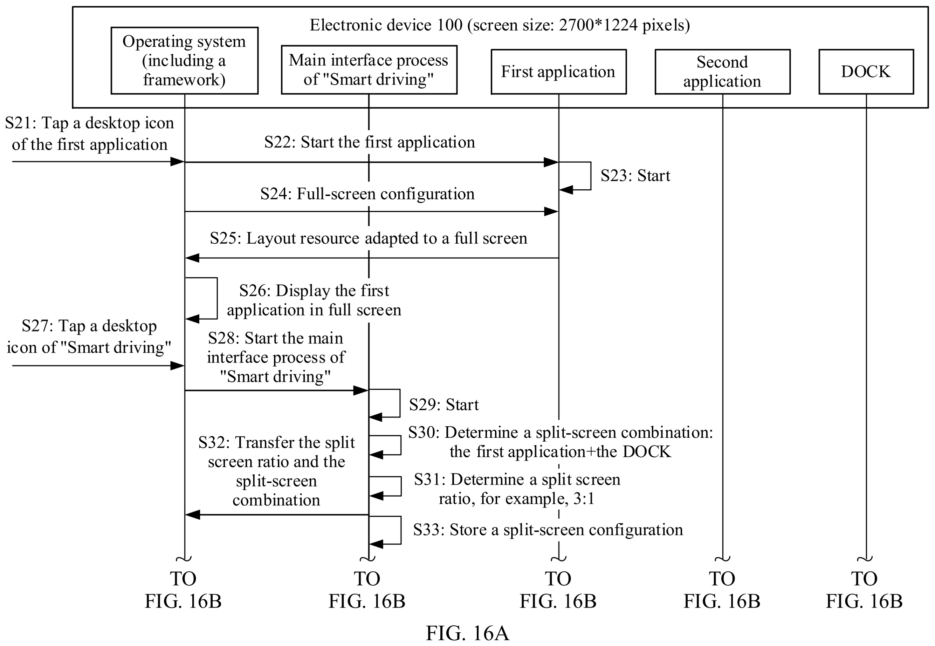

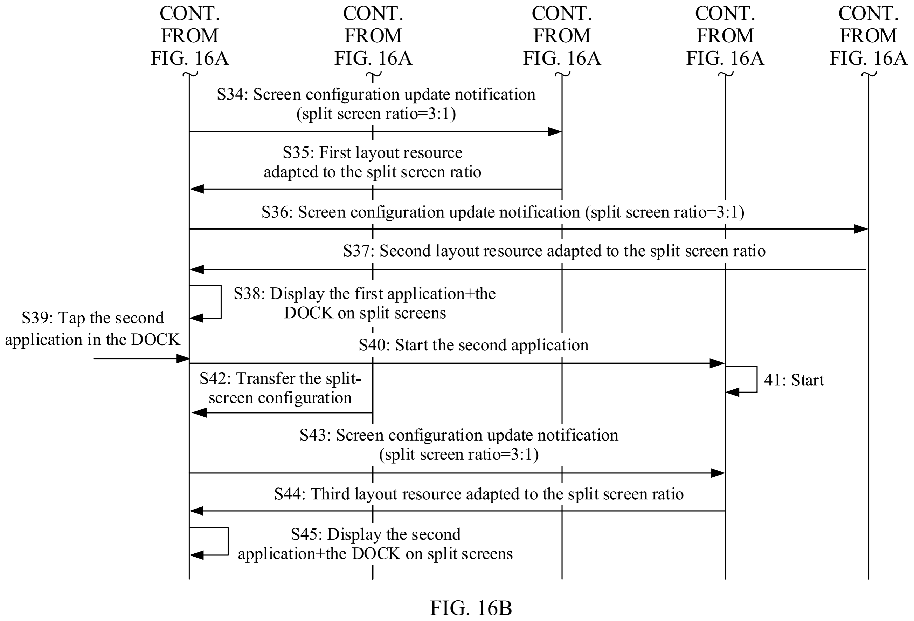

The first screen configuration update notification may be a screen configuration update notification mentioned in step S36 in the subsequent embodiment in FIG. 16A and FIG. 16B.

With reference to the first aspect, in some embodiments, the electronic device includes an application framework layer. That the electronic device displays the first split-screen combination on the screen again may specifically include: The third application reads, from the process variable, the stored recent split-screen combination and the split screen ratio used for the recent split-screen combination. The third application transfers the recent split-screen combination and the split screen ratio to the application framework layer. The application framework layer forms a split screen based on the split screen ratio, and sends a second screen configuration update notification to the first application in the recent split-screen combination, where the second screen configuration update notification carries a size of the first split-screen window. The first application feeds back a first layout resource to the application framework layer based on the second screen configuration update notification, where the first layout resource is a layout resource obtained based on the size of the first split-screen window, and is different from a second layout resource used when the first application is displayed in full screen. The application framework layer displays a user interface of the first application in the first split-screen window based on the first layout resource.

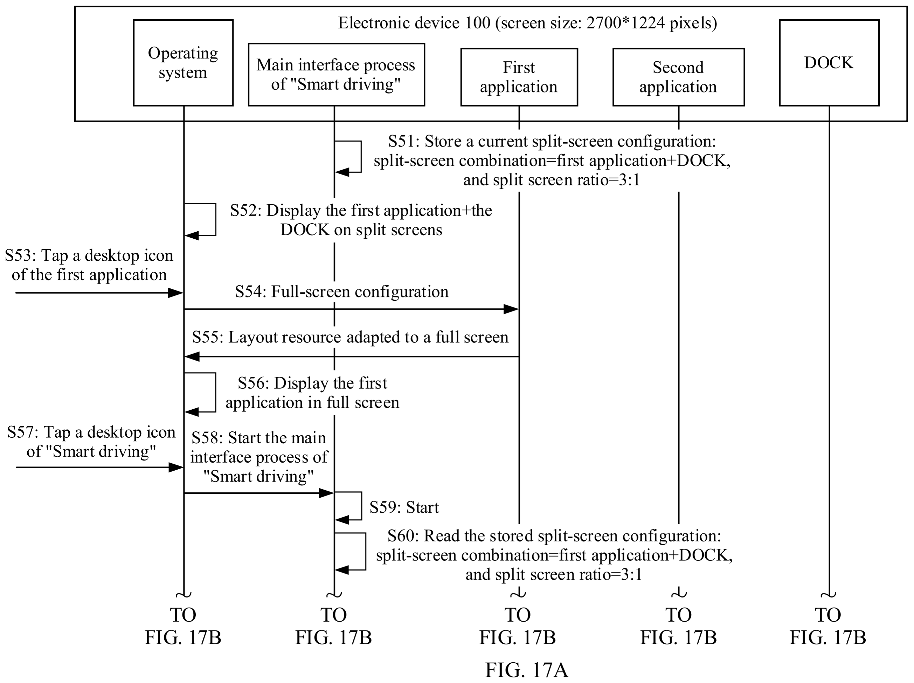

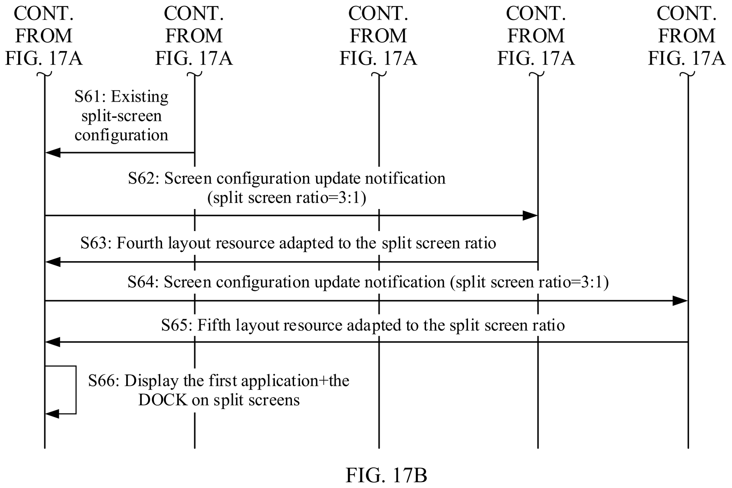

The first screen configuration update notification may be a screen configuration update notification mentioned in step S62 in the subsequent embodiment in FIG. 17A and FIG. 17B.

With reference to the first aspect, in some embodiments, the DOCK includes a fifth application that does not support screen splitting, and that screen splitting is not supported means that the fifth application does not have the layout resource configured based on the first split-screen window. The method in the first aspect may further include: The electronic device detects a user operation of opening the fifth application in the DOCK, and in response to this, the electronic device displays a user interface of the fifth application in full screen on the screen, and further displays the floating bubble of the third application on the screen. The electronic device detects a user operation of tapping the floating bubble, and in response to this, the electronic device displays the recent split-screen combination on the screen.

The fifth application may be "Scan to pay" in an example in a subsequent embodiment.

In this way, when detecting a user operation of starting an application that does not support screen splitting, for example, a user operation of tapping a "Scan to pay" icon, the electronic device may display a floating bubble on a user interface of "Scan to pay", so that the user can back to the recent split-screen combination via the floating bubble.

According to a second aspect, this application provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in any one of the first aspect and the possible implementations of the first aspect.

According to a third aspect, an embodiment of this application provides a chip system. The chip system is used in an electronic device, the chip system includes one or more processors, and the processor is configured to invoke computer instructions, so that the electronic device performs the method described in any one of the first aspect and the possible implementations of the first aspect.

According to a fourth aspect, this application provides a computer-readable storage medium, including instructions. When the instructions are run on an electronic device, the electronic device is enabled to perform the method described in any one of the first aspect and the possible implementations of the first aspect.

According to a fifth aspect, this application provides a computer program product including instructions. When the computer program product runs on an electronic device, the electronic device is enabled to perform the method described in any one of the first aspect and the possible implementations of the first aspect.

### BRIEF DESCRIPTION OF DRAWINGS

To describe the technical solutions in embodiments of this application or in the background more clearly, the following describes the accompanying drawings for describing embodiments of this application or the background.
FIG. 1 shows an example of an electronic device according to an embodiment of this application;
FIG. 2A shows an example of a sidebar DOCK on an electronic device 100;
FIG. 2B shows an example of a desktop DOCK on an electronic device 100;
FIG. 3A to FIG. 3D show an example of a process of entering screen splitting;
FIG. 4 shows an example of a user interface of a split-screen combination according to an embodiment of this application;
FIG. 5 shows an example of a home screen (Home screen) displayed on an electronic device 100;
FIG. 6A and FIG. 6B show an example of a user interaction process of starting a split-screen combination via a desktop icon;

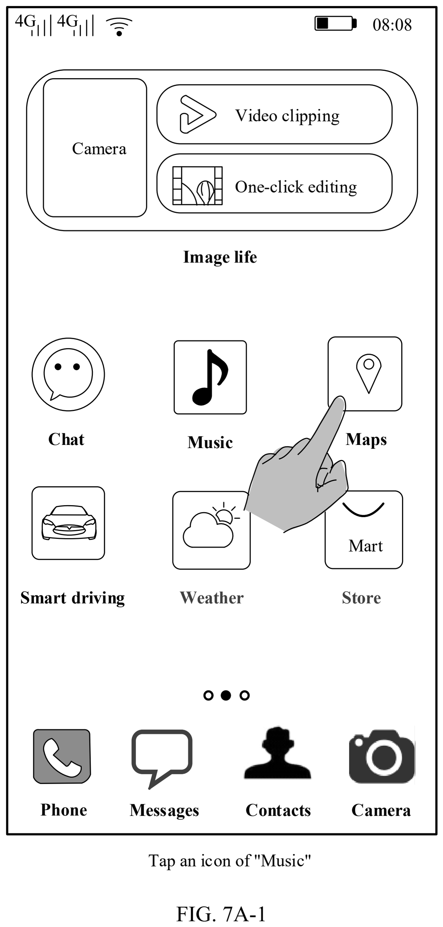

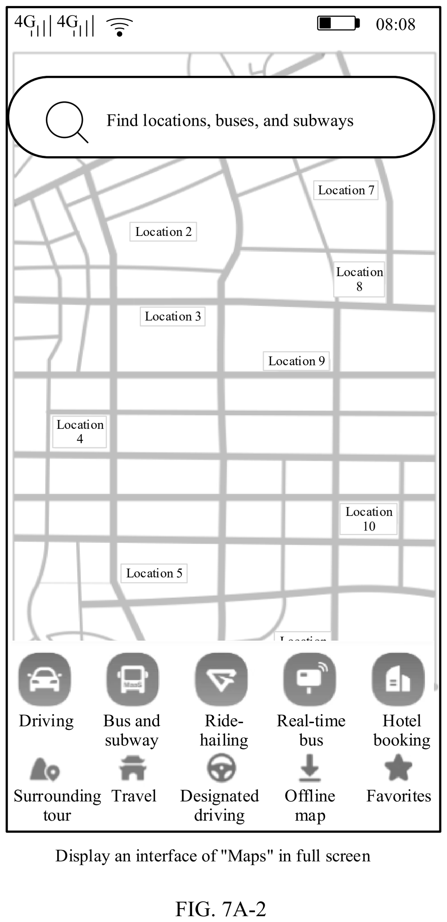

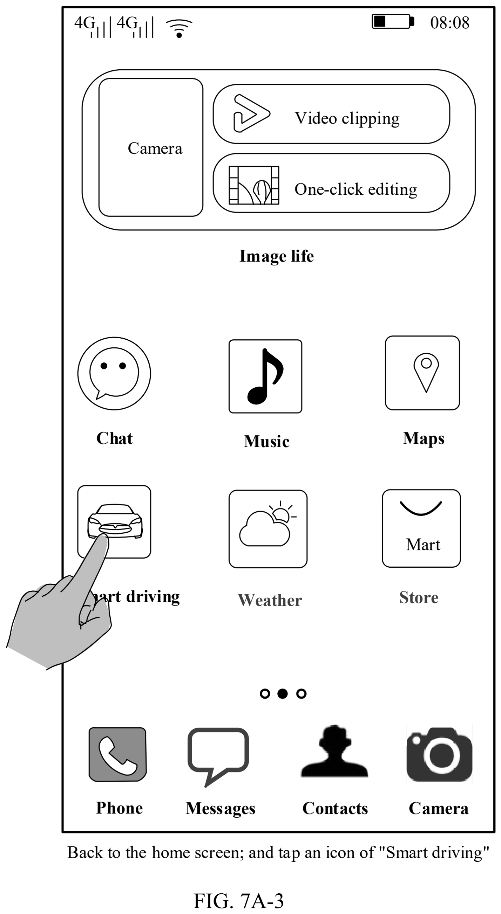

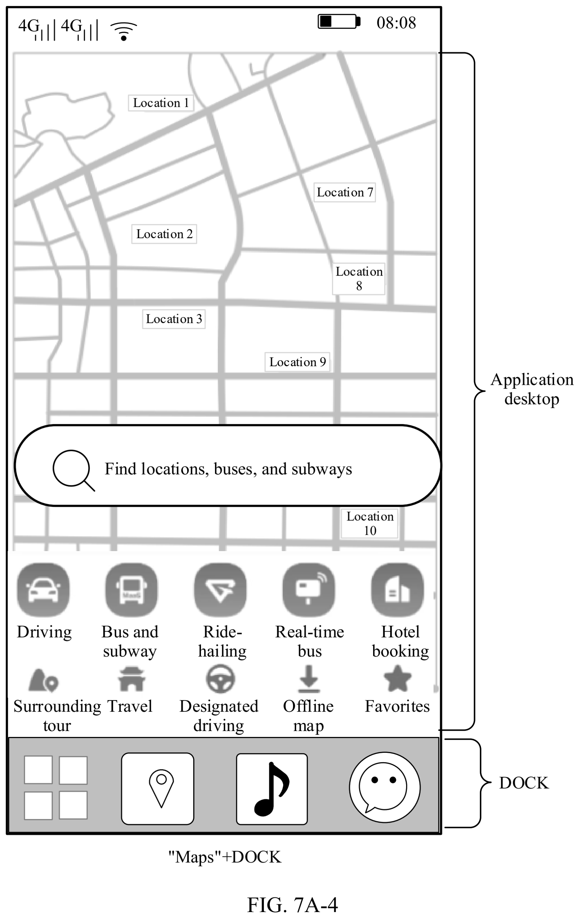

FIG. 7A-1 to FIG. 7A-4 show an example of a split-screen combination;

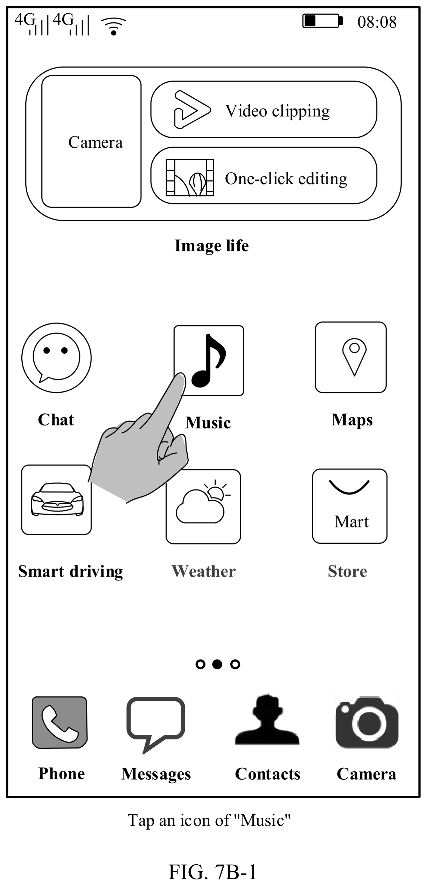

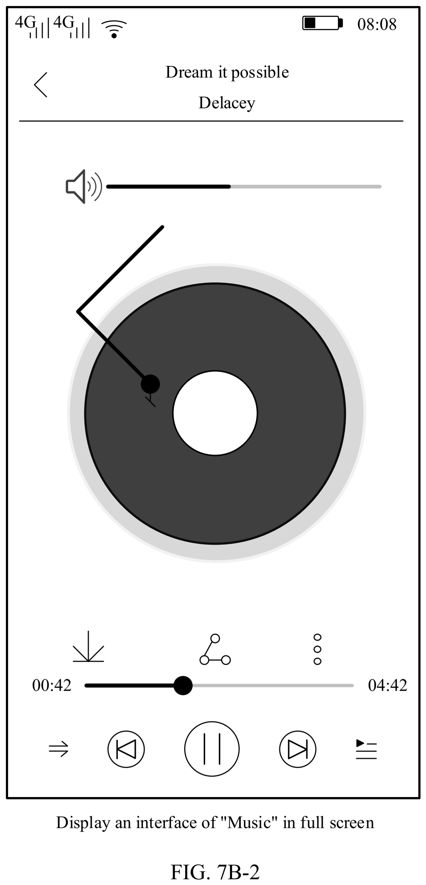

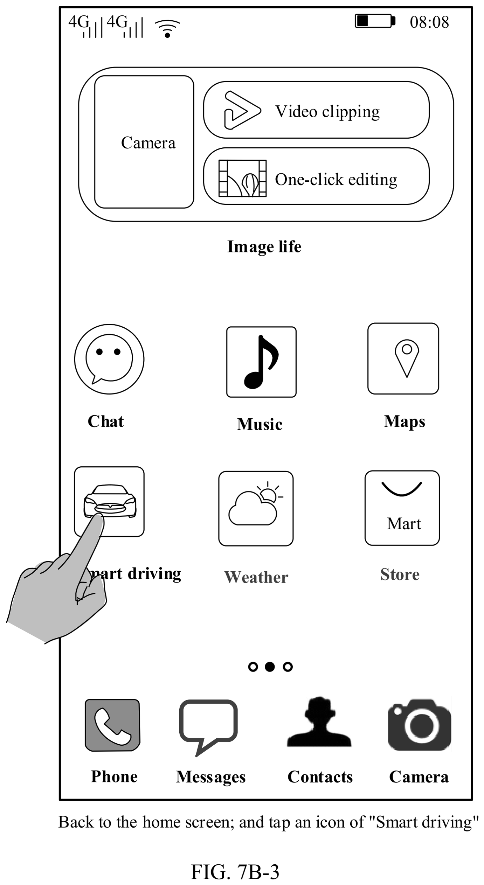

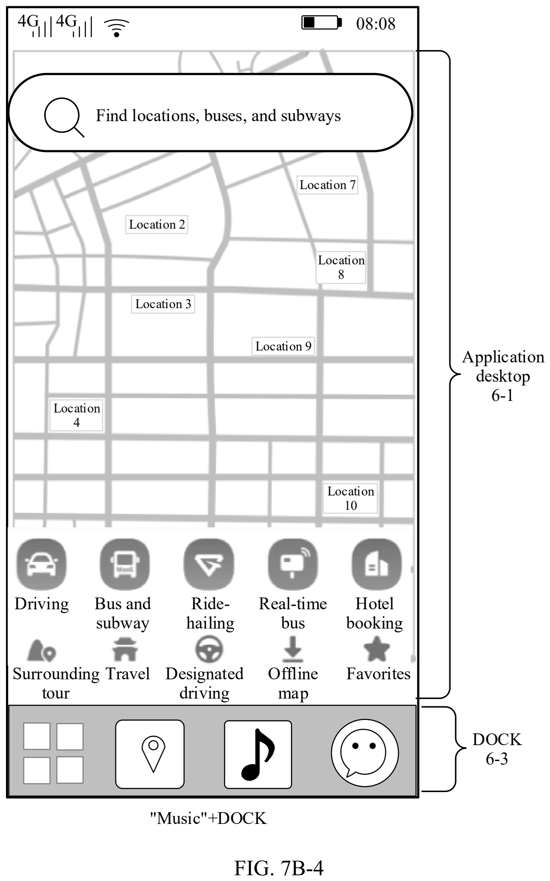

FIG. 7B-1 to FIG. 7B-4 show an example of another split-screen combination;

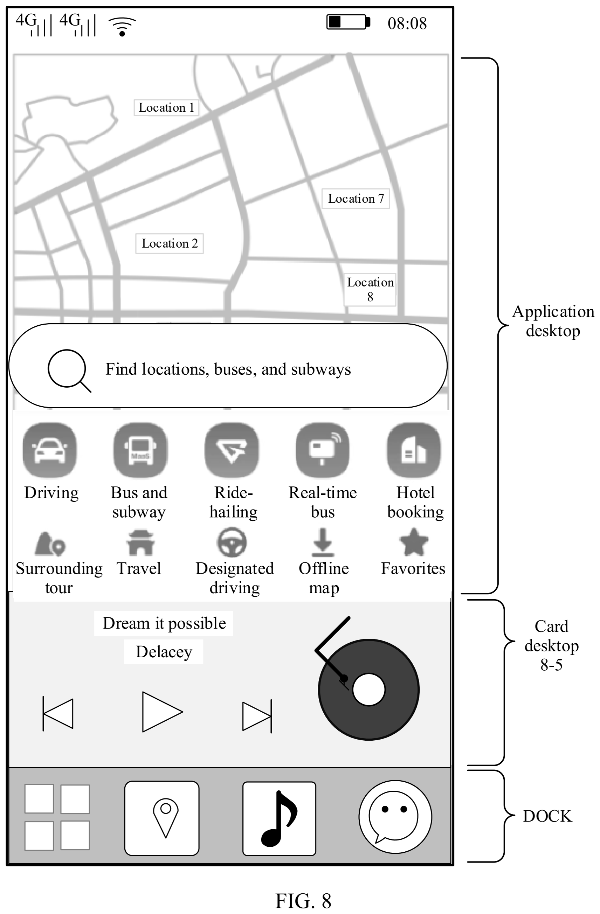

FIG. 8 shows an example of a user interface of another split-screen combination according to an embodiment of this application;

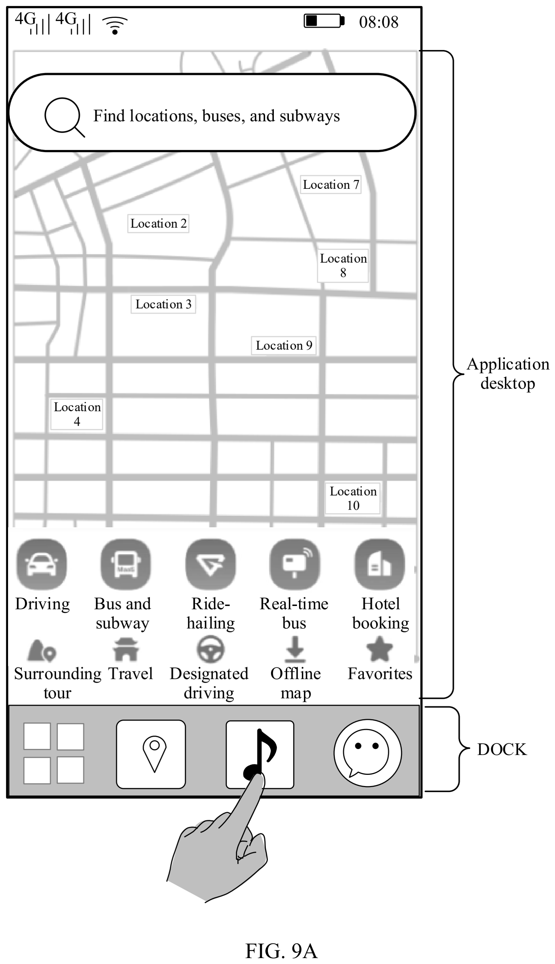

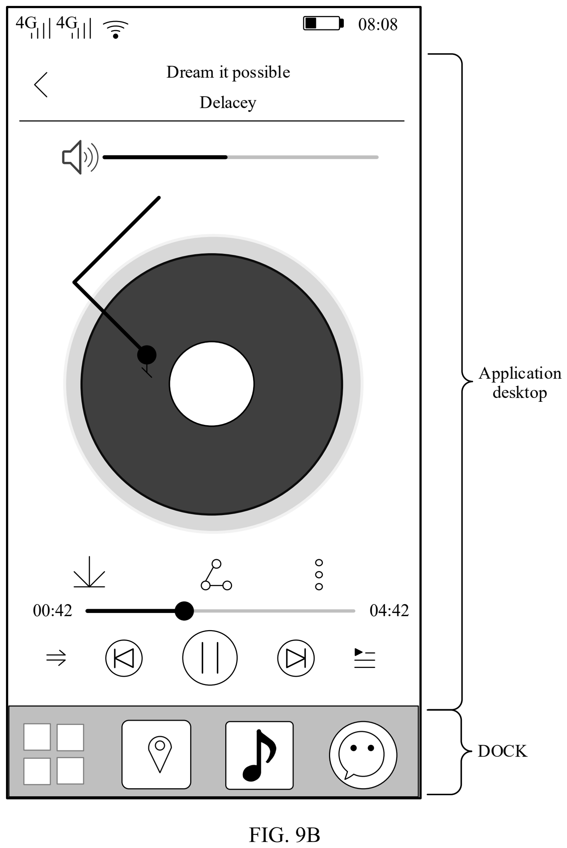

FIG. 9A and FIG. 9B show an example of an application switching process according to an embodiment of this application;

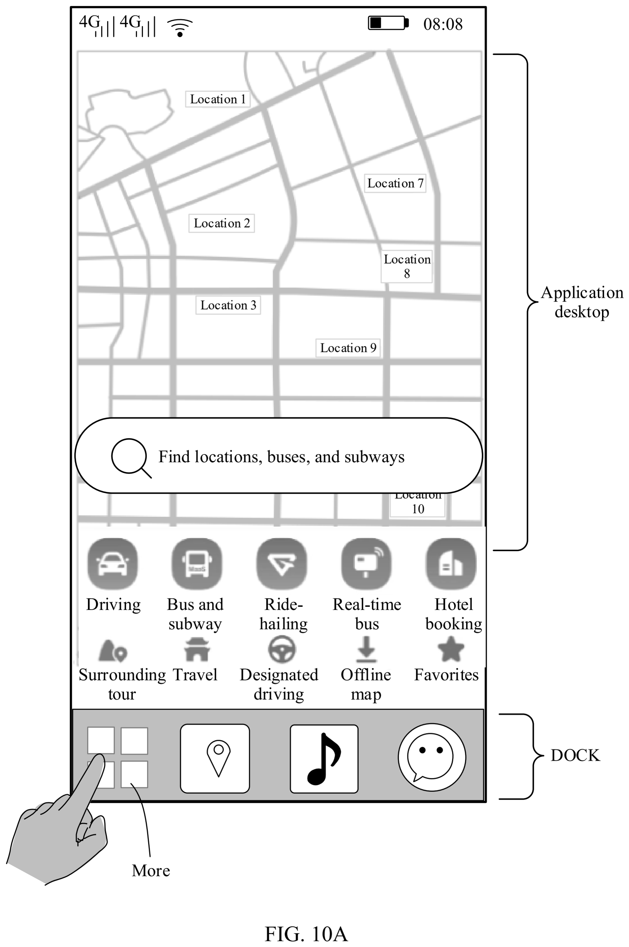

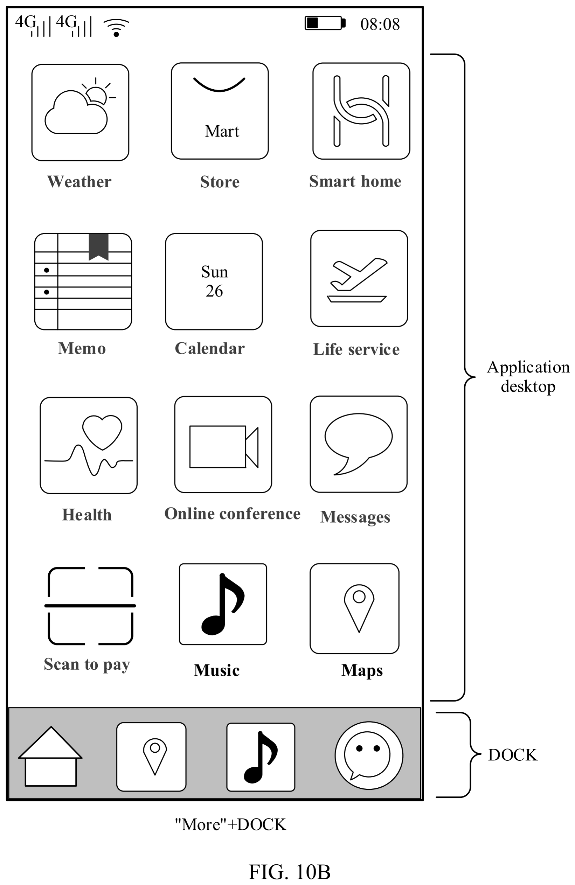

FIG. 10A and FIG. 10B show an example of another application switching process according to an embodiment of this application;

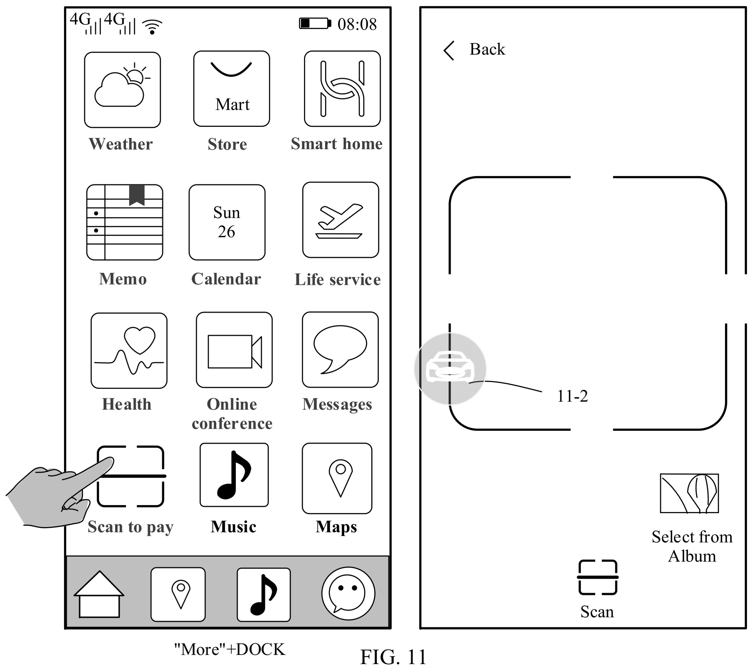

FIG. 11 shows an example of a user interface according to an embodiment of this application;

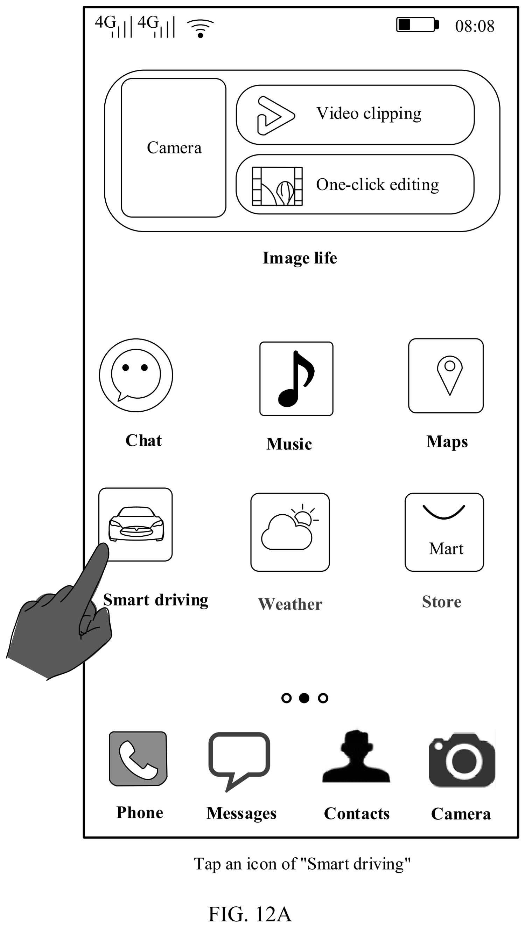

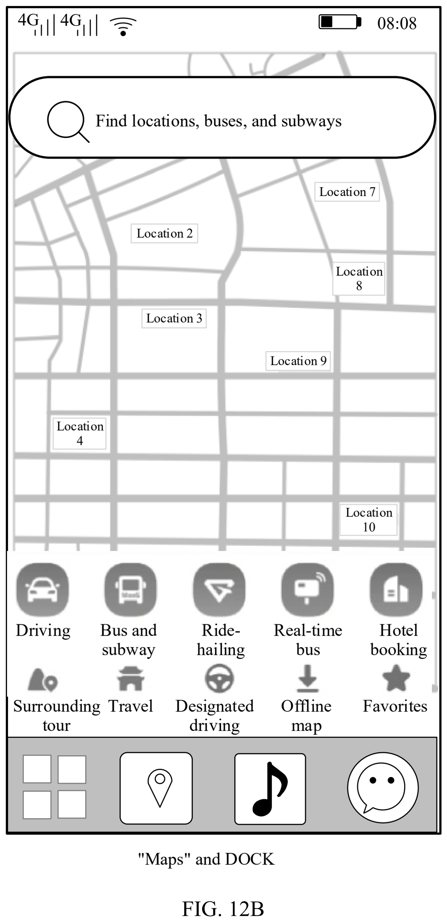

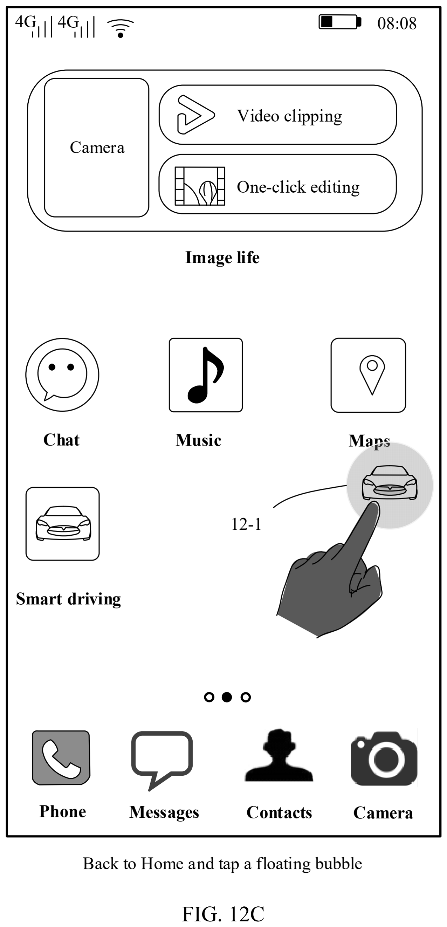

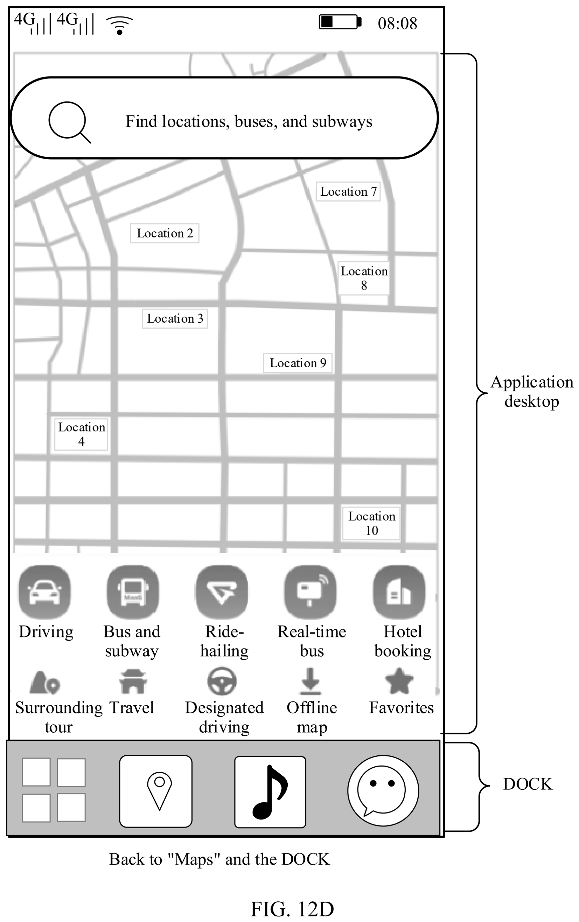

FIG. 12A to FIG. 12D show an example of a process of starting a recent split-screen combination via a floating bubble;

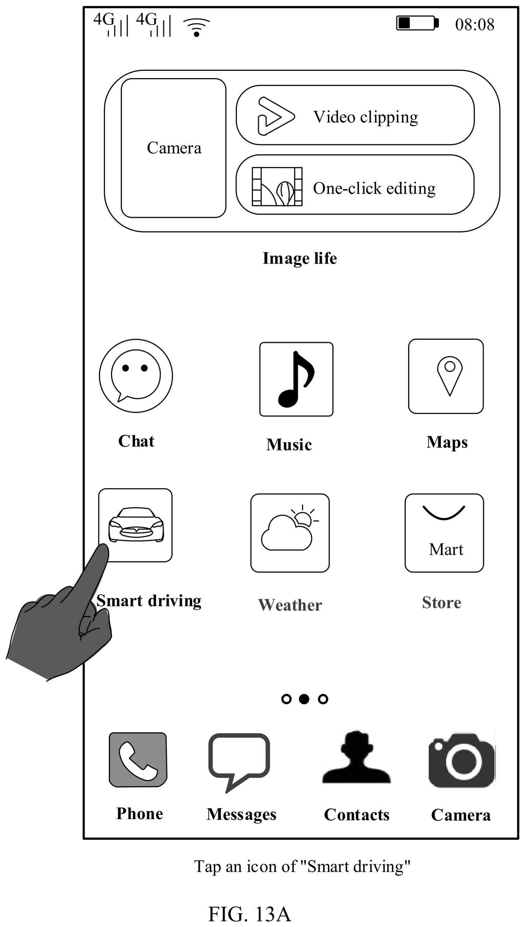

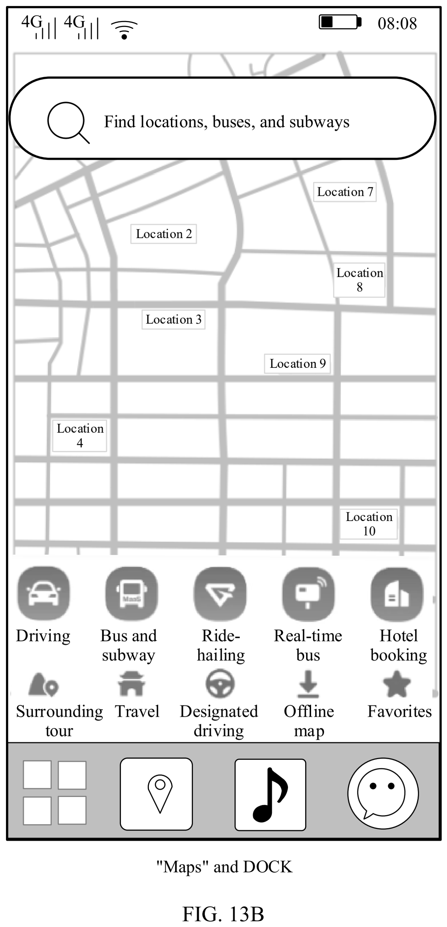

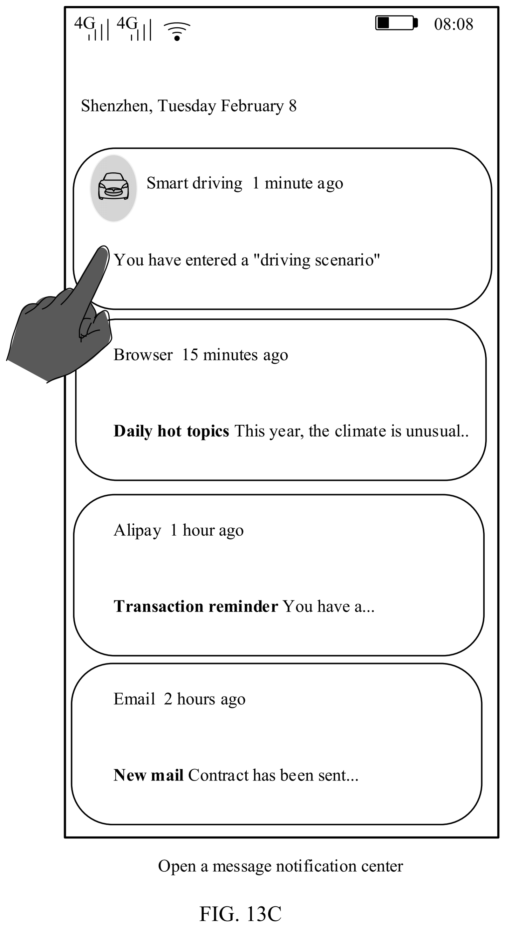

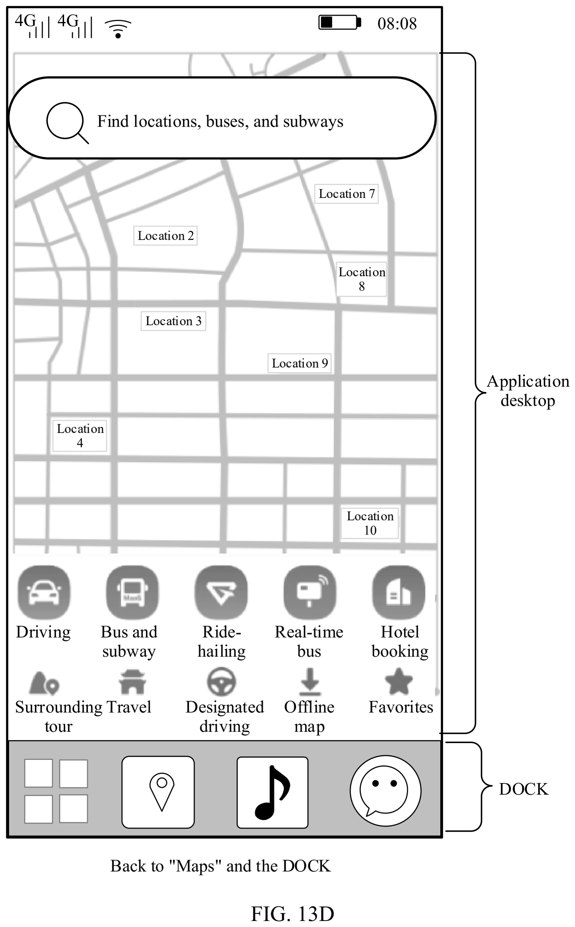

FIG. 13A to FIG. 13D show an example of a process of starting a recent split-screen combination via a message notification entry;

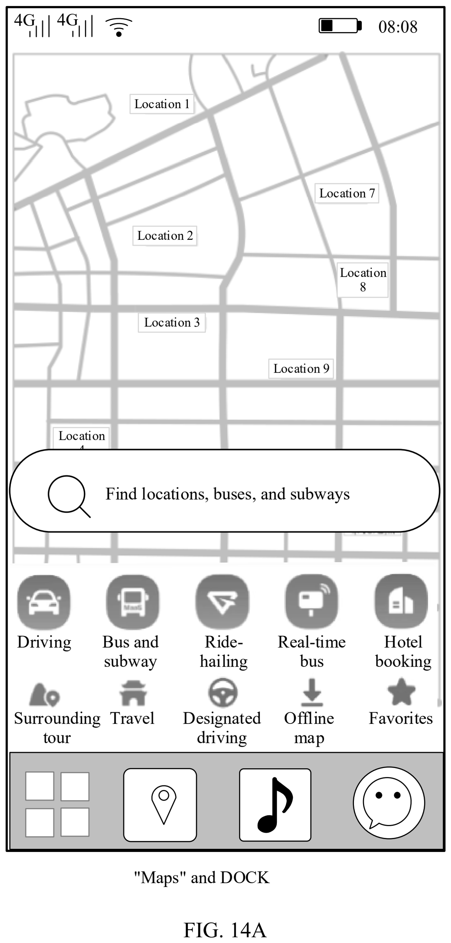

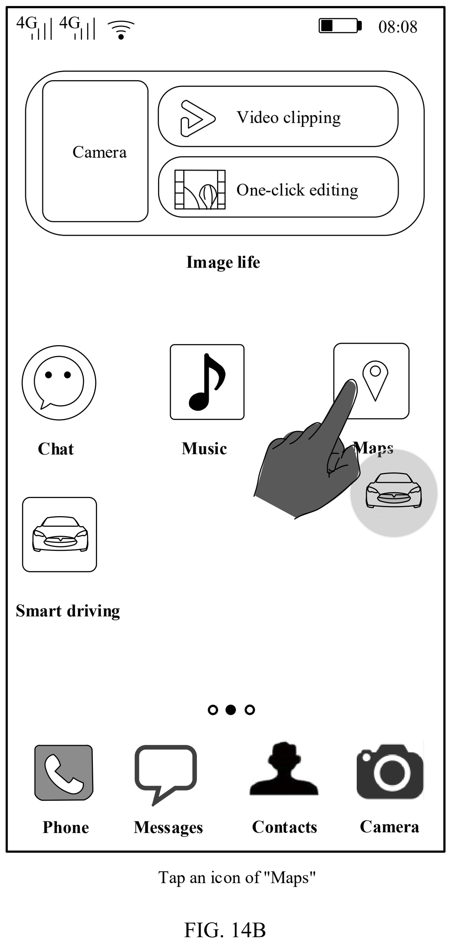

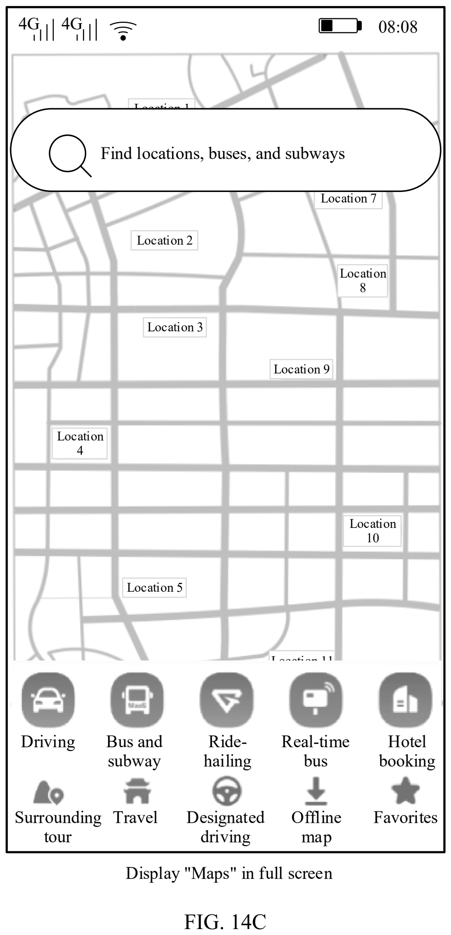

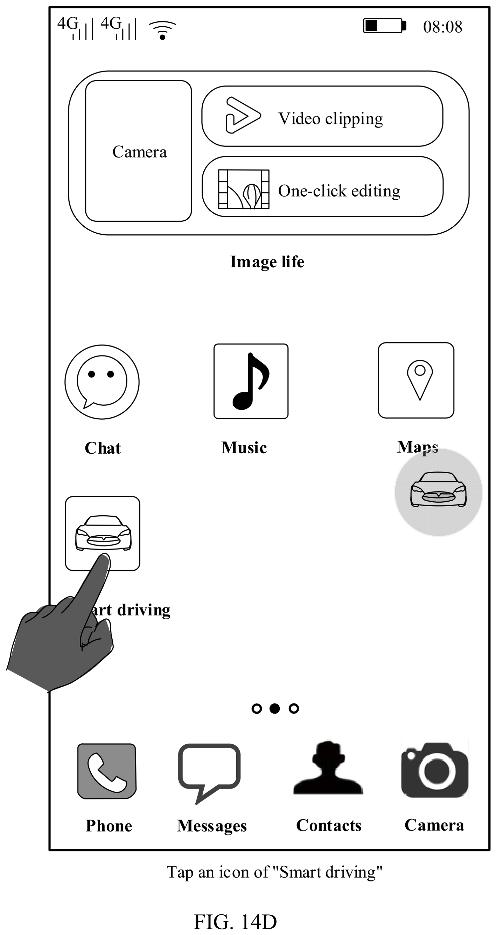

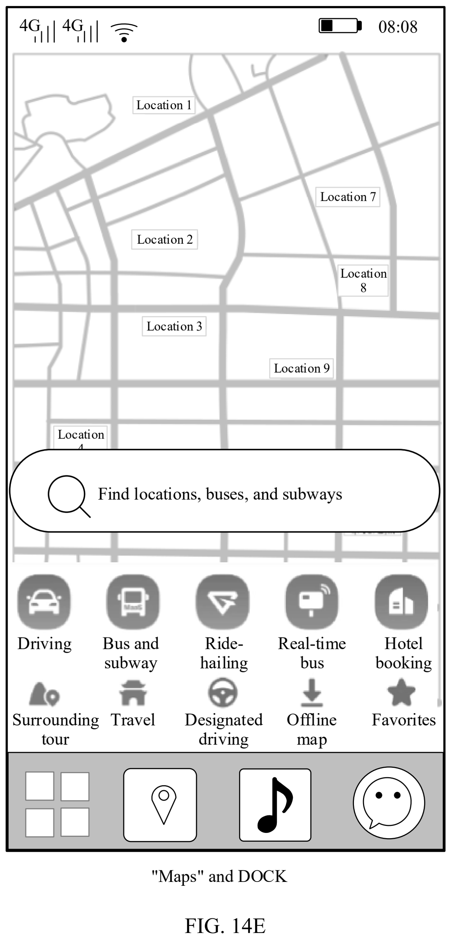

FIG. 14A to FIG. 14E show an example of a case in which a recent split-screen combination is returned;

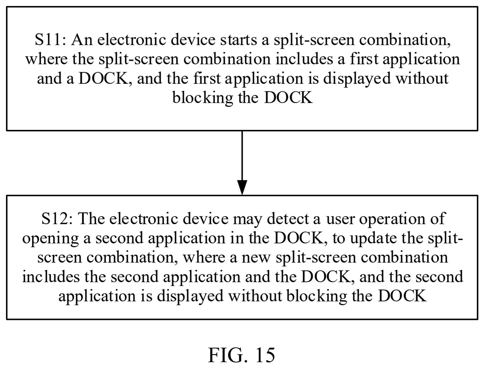

FIG. 15 shows an example of an overall procedure of an application switching method according to an embodiment of this application;
FIG. 16A and FIG. 16B show an internal implementation procedure of switching from a first application to a second application; and
FIG. 17A and FIG. 17B show an internal implementation procedure of starting a recent split-screen combination.

### DESCRIPTION OF EMBODIMENTS

Terms used in the following embodiments of this application are merely intended to describe specific embodiments, but are not intended to limit this application. As used in the specification of this application and the appended claims, a singular expression "a", "an", "the", "the foregoing", "such a", or "this" is also intended to include a plural expression unless otherwise clearly indicated in the context. It should also be understood that the term "and/or" used in this application means and includes any or all possible combinations of one or more listed items.

The following describes an electronic device, a user interface used for such an electronic device, and an embodiment for using such an electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, or another operating system. The portable electronic device may alternatively be another portable electronic device, for example, a laptop (Laptop) having a touch-sensitive surface or a touch panel. It should be further understood that, in some other embodiments, the electronic device may not be a portable electronic device, but is a desktop computer having a touch-sensitive surface or a touch panel.

A term "user interface (user interface, UI)" in the specification, claims, and accompanying drawings of this application is a medium interface for interaction and information exchange between an application or an operating system and a user, and implements conversion between an internal form of information and a form acceptable to the user. The user interface of the application is source code written in a specific computer language like java or an extensible markup language (extensible markup language, XML). The source code of the interface is parsed and rendered on an electronic device, and finally presented as user-recognizable content, for example, a control like a picture, a text, or a button. A control (control) is also referred to as a widget (widget), and is a basic element of a user interface. Typical controls include a toolbar (toolbar), a menu bar (menu bar), a text box (text box), a button (button), a scrollbar (scrollbar), a picture, and a text. An attribute and content of the control on the interface are defined through a tag or node. For example, in an XML file, the control on the interface is defined through a node like <Textview>, <ImgView>, or <VideoView>. One node corresponds to one control or attribute on the interface. After being parsed and rendered, the node is displayed as user-visible content. In addition, interfaces of many applications such as a hybrid application (hybrid application) usually further include a web page. The web page, also referred to as a page, may be understood as a special control embedded in an application interface. The web page is source code written in a specific computer language, for example, a hypertext markup language (hypertext markup language, GTML), a cascading style sheet (cascading style sheet, CSS), or JavaScript (JavaScript, JS). The web page source code may be loaded and displayed as user-recognizable content by a browser or a web page display component having a function similar to a function of the browser. Specific content included in the web page is also defined through a tag or node in the web page source code. For example, GTML defines an element and an attribute of the web page through <p>, <img>, <video>, and <canvas>.

The user interface is usually represented in a form of a graphical user interface (graphical user interface, GUI), and is a user interface that is displayed in a graphical manner and that is related to a computer operation. The user interface may include interface elements such as windows and controls displayed on a display of the electronic device. The controls may include visual interface elements such as an icon, a button, a menu, a list, a tab, a text box, a dialog box, a status bar, a navigation bar, and a widget. UI attributes such as a size, a style, and a color that are designed by a GUI designer for the interface element may be defined in interface source code and a resource file of the application. A layout resource is used to define an interface architecture.

An example electronic device 100 provided in the following embodiments of this application is first described.

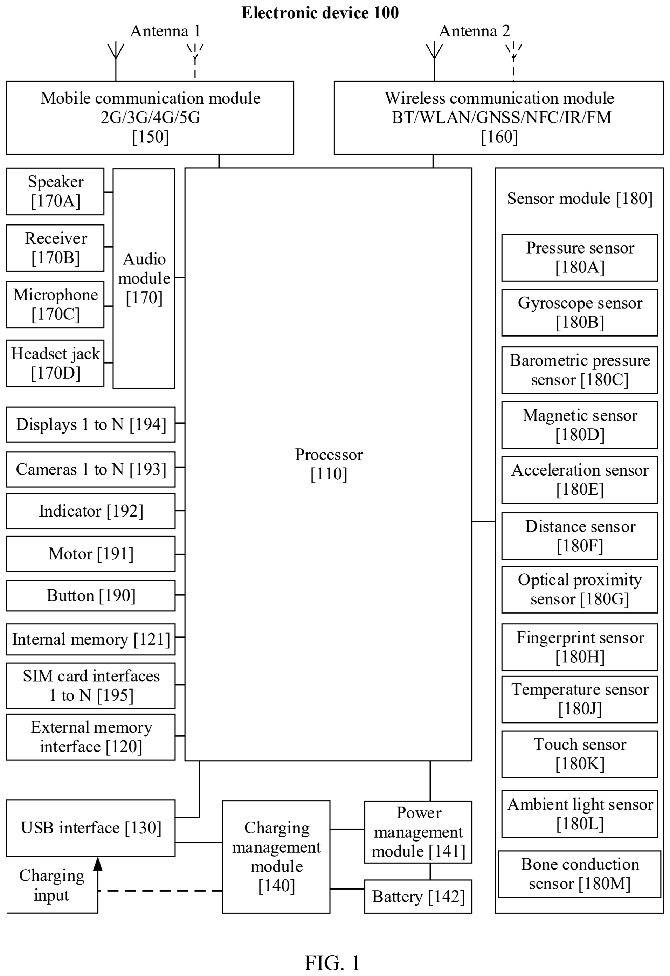

FIG. 1 is a diagram of a structure of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180G, a temperature sensor 180J, a touch sensor 180K, an ambient light sensor 180L, a bone conduction sensor 180M, and the like.

It may be understood that the structure shown in embodiments of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a central processing unit (central processing unit, CPU), a graphics processing unit (graphics processing unit, GPU), a neural-network processing unit (neural-network processing unit, NPU), a modem processor, an image signal processor (image signal processor, ISP), a controller, a memory, a video codec, a digital signal processor (digital signal processor, DSP), a baseband processor, and the like. Different processing units may be independent components, or may be integrated into one or more processors. In some embodiments, the electronic device 100 may alternatively include one or more processors 110.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, thereby improving efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communication bus. The UART interface converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules that is shown in embodiments of the present invention is merely an example for description, and does not constitute a limitation on a structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. For example, the wireless communication module 160 may include a Bluetooth module, a Wi-Fi module, and the like.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In some embodiments, after generating a drawing command used by a UI thread of an application to create an interface element, the CPU may transmit (or share) the drawing command to the GPU, and notify the GPU to perform rendering according to the drawing command. Herein, the drawing command may be used to indicate how to draw a specific interface element on a user interface by using a drawing element like a graph, a text, or a picture.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, data such as music, a photo, or a video is stored in the external storage card.

The internal memory 121 may be configured to store one or more computer programs. The one or more computer programs include instructions. The processor 110 may run the foregoing instructions stored in the internal memory 121, so that the electronic device 100 is enabled to perform a photographing preview method of an electronic device, various function applications, data processing, and the like provided in some embodiments of this application. The internal memory 121 may include a program storage area and a data storage area. The program storage area may store an operating system. The program storage area may further store one or more applications (such as Gallery or Contacts), and the like. The data storage area may store data (for example, a photo or a contact) created in a process of using the electronic device 100. In addition, the internal memory 121 may include a high-speed random access memory, or may include a nonvolatile memory, for example, at least one magnetic disk storage component, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating an SMS message is performed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in applications such as switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180G is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K may also be referred to as a touch panel or a touch-sensitive surface. The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

The electronic device 100 shown as an example in FIG. 1 may display, by using the display 194, user interfaces described in the following embodiments. The electronic device 100 may detect, on each user interface by using the touch sensor 180K, a touch operation, for example, a tap operation (for example, a touch operation or a double-tap operation on an icon) on each user interface, or for another example, an upward or downward swipe operation, or an operation of performing a circle drawing gesture, or the like on each user interface. In some embodiments, the electronic device 100 may detect, by using the gyroscope sensor 180B, the acceleration sensor 180E, or the like, a motion gesture performed by the user holding the electronic device 100, for example, shaking the electronic device. In some embodiments, the electronic device 100 may detect a non-touch gesture operation by using the camera 193 (for example, a 3D camera or a depth camera).

To implement application switching, the electronic device 100 may provide the following functions.

### (1) DOCK

The DOCK is a functional interface that is in a graphical user interface and that is used to start an application and switch between running applications. A user may add an application, especially a frequently used application, to the DOCK, so as to quickly switch to open the frequently used application.

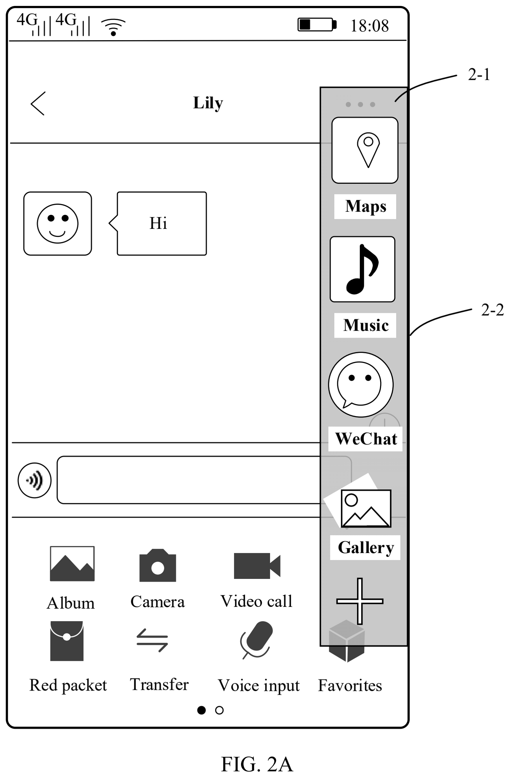

For example, FIG. 2A shows a sidebar DOCK on the electronic device 100. A sidebar DOCK 2-1 may be located on an edge 2-2 of a screen, and applications such as Maps, WeChat, Music, and Gallery are included in the sidebar DOCK 2-1. The applications can be shown with icons in the DOCK. The sidebar DOCK may be hidden, and may be displayed when a mouse or a finger is close to the edge 2-2 of a system desktop or slides from the edge 2-2 to an inner side of the screen or drags the application close to the edge 2-2.

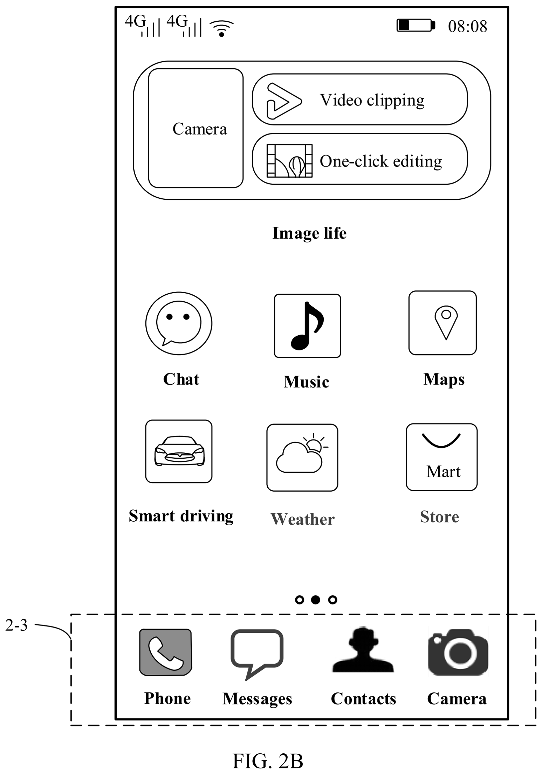

For another example, FIG. 2B shows a desktop DOCK on the electronic device 100. Different from the sidebar DOCK shown in FIG. 2A, the desktop DOCK 2-3 is not hidden.

When the user switches between applications by using the sidebar DOCK, the user needs to first move close to the edge 2-2 to display the DOCK, and then select to start an application.

When the user switches between applications by using the desktop DOCK, the user needs to first press a home (Home) button to exit a currently opened application and back to the system desktop, and then tap a target application in the DOCK to start the application. Herein, "exit" means that the currently opened application is no longer displayed in full screen, and the application may be switched to run in the background. In this case, the desktop DOCK is no longer blocked and is visible. Subsequently, if the target application needs to be switched to another application, the foregoing process needs to be repeated.

It can be learned that a started application blocks the desktop DOCK. As a result, the desktop DOCK cannot be always visible to the user, and the user needs to first back to the system desktop when switching between applications. Herein, the system desktop may include a plurality of pages, and one of the pages is a home screen.

### (2) Multi-window capability

The multi-window capability means that a plurality of applications are simultaneously displayed on one screen in a multi-window form, in other words, the plurality of applications are allowed to share the same screen simultaneously. A specific implementation of the multi-window capability may include: displaying two applications in parallel (a split-screen mode), or displaying an application over another application in a superimposed manner by using a small window (a floating window mode).

A process of entering a split screen may be as follows: As shown in FIG. 3A to FIG. 3D, on a currently opened application interface, swipe inward from left and right edges of the screen and pause to open a sidebar DOCK, touch and hold an application icon in the DOCK, and drag the application icon to the screen to form the split screen. In the split-screen mode, a user may switch back and forth between an original application and a target application in upper and lower split screens. In the floating window mode, the user may operate the target application in a floating window. Certainly, the split screen is not limited to a form of the upper and lower split screens. In the split-screen mode, the user may drag a split line between split-screen windows to an edge of the screen to exit the split screen. Alternatively, the user may separately open one of the split-screen applications to exit the split screen. After exiting the split screen, if the user wants to enter the split screen again, the user needs to re-perform screen splitting operations shown in FIG. 3A to FIG. 3D.

However, application switching implemented based on the multi-window capability has the following problems: A display area and an operation area of the target application are greatly compressed. In addition, if the target application is not adapted to the multi-window capability, content of the target application is truncated and cannot be displayed. The DOCK is not resident, and the sidebar DOCK needs to be pulled out in each application switching.

To resolve the foregoing problems, embodiments of this application provide an application switching method, so that a DOCK can be resident on a screen of an electronic device 100 for display, to help a user open an application in the DOCK at any time. This improves application switching efficiency.

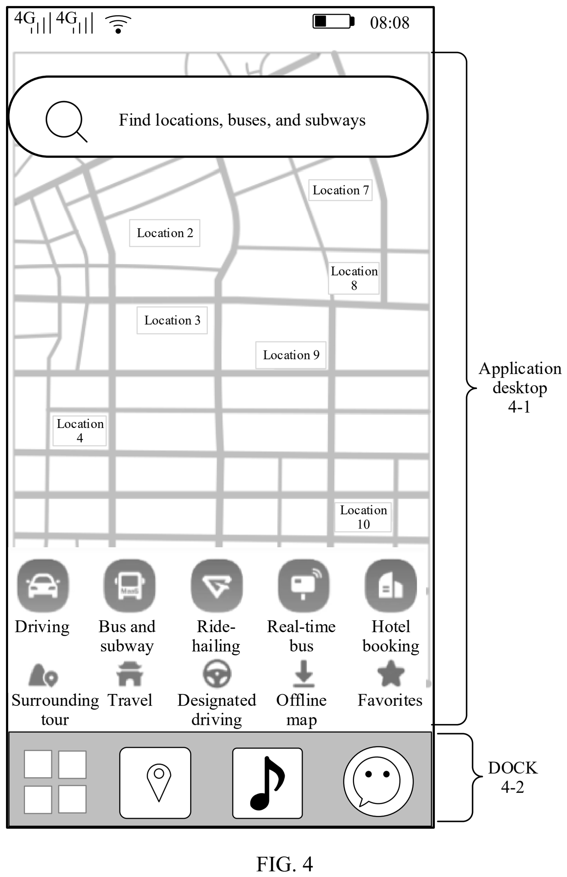

In the method, the electronic device 100 may start a split-screen combination. As shown in FIG. 4, two parts may be obtained through division from a display area of the screen. The two parts may be respectively used as an application desktop 4-1 and a DOCK 4-2. The DOCK 4-2 may be used to display a frequently used application, and the application desktop 4-1 may be used to display a user interface of an application in the DOCK. The split-screen combination includes the DOCK and the application displayed on the application desktop 4-1. The application on the application desktop 4-1 is not displayed in full screen, and an interface layout of the application is adapted to the application desktop 4-1, so that displayed content does not exceed the application desktop 4-1. Therefore, the DOCK 4-2 is not blocked. In this way, the user can normally browse a user interface of an opened application, and can view the DOCK at any time, so that the user can conveniently switch between applications when using the application.

The technical solutions provided in embodiments of this application are described below.

First, a man-machine interaction method provided in embodiments of this application is described by using a graphical user interface (graphical user interface, GUI) generated by the electronic device 100.

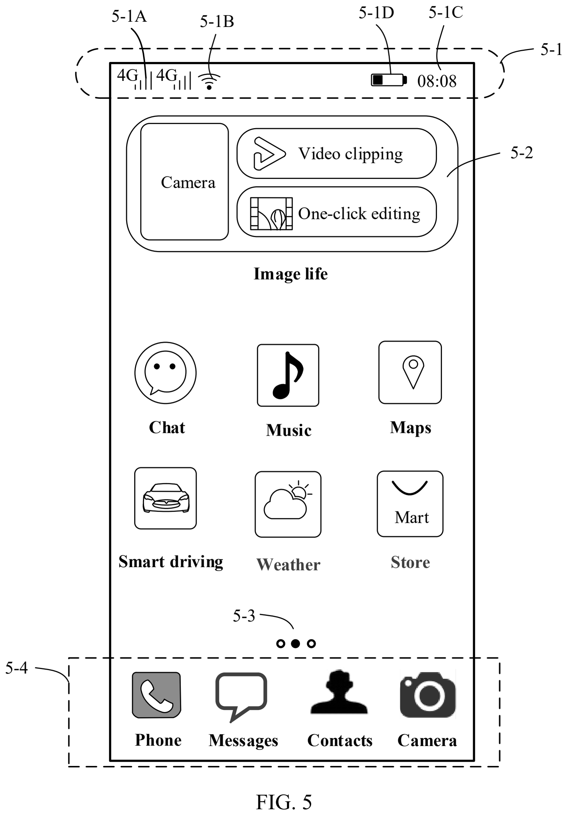

FIG. 5 shows an example of a home screen (Home screen) displayed on the electronic device 100. The home screen may be a page on a system desktop, and the user may switch between pages by swiping left and right on the screen.

As shown in FIG. 5, the home screen may include a status bar 5-1, a smart card 5-2, a page break 5-3, a desktop DOCK 5-4, and other application icons. The status bar 5-1 may include a signal strength indicator 5-1A of a mobile communication signal (which may also be referred to as a cellular signal), a signal strength indicator 5-1B of a wireless fidelity (wireless fidelity, Wi-Fi) signal, a time indicator 5-1C, a battery status indicator 5-1D, and the like. The smart card 5-2 may be used to display a frequently used application and a shortcut function of the application in a form of cards, for example, shortcut functions such as camera, video clipping for video production, and one-click editing. The page break 5-3 may indicate which page in the system desktop is currently displayed. The desktop DOCK 5-4 may be used to display icons of frequently used applications, for example, an icon of Phone, an icon of Messages, an icon of Contacts, and an icon of Camera. The other application icons may include, for example, an icon of Chat, an icon of Music, an icon of Maps, an icon of Smart driving, an icon of Weather, and an icon of Store.

"Smart driving" is an application that is introduced in embodiments of this application and that is used to start a split-screen combination, and may be used as an example of an application or a function that provides smart driving experience for the user. "Smart driving" is merely an example, and there may be another application that can start a split-screen combination. This may be determined based on an actual application requirement.

Start a split-screen combination.

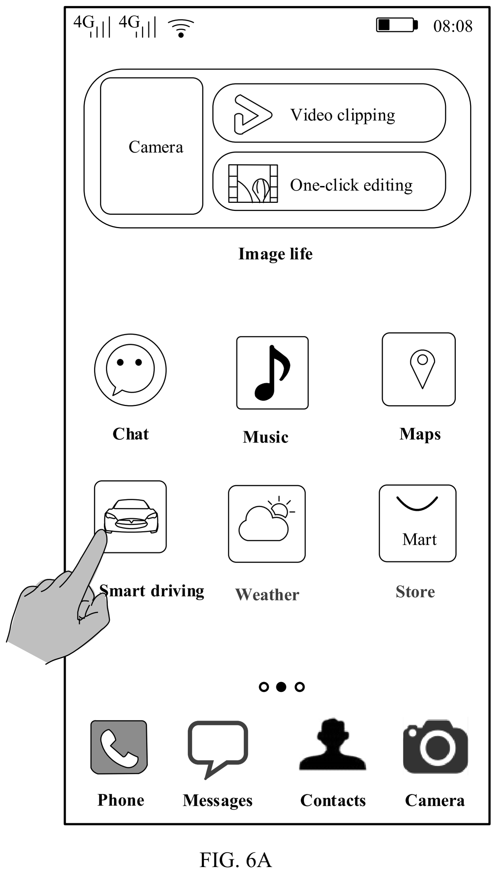

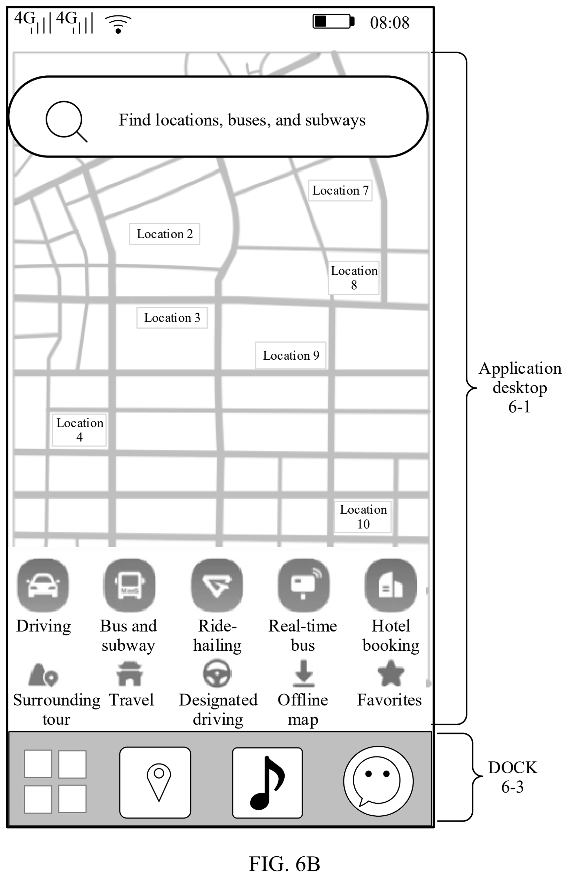

FIG. 6A and FIG. 6B show an example of a user interaction process of starting a split-screen combination via a desktop icon.

On the home screen, the electronic device 100 may detect a user operation of tapping the application icon of "Smart driving".

In response to this, the electronic device 100 may start "Smart driving", and specifically, start a main interface (main activity) process of "Smart driving". The process may be used to start the split-screen combination. A main interface is a user interface that is first displayed when "Smart driving" is opened. As shown in FIG. 6A and FIG. 6B, the electronic device 100 may start the split-screen combination by starting a main user interface of "Smart driving". A split-screen interface formed by the split-screen combination may include two parts: an application desktop 6-1 and a DOCK 6-3. The application desktop 6-1 may display a user interface of a specific application, for example, a user interface of "Maps", to provide a map service like navigation for the user to travel. The DOCK 6-3 may display some application options, for example, "Music" and "Chat", so that the user can conveniently switch to Music or Chat during driving. This adds some fun and convenience to travel of the user. Certainly, the DOCK 6-3 further includes "Maps" that has been displayed on the application desktop 6-1. In this case, the split-screen combination is a split-screen combination including the map application and the DOCK 6-3.

The specific application displayed on the application desktop 6-1 may be a recently used application. For example, as shown in FIG. 7A-1 to FIG. 7A-4, if the recently used application is "Maps", the split-screen combination is a split-screen combination including Maps and the DOCK. As shown in FIG. 7B-1 to FIG. 7B-4, if the recently used application is "Music", the split-screen combination is a split-screen combination including Music and the DOCK. Not limited to the recently opened application, the specific application displayed on the application desktop 6-1 may alternatively be a default application. For example, if there is no recently used application, for example, after the electronic device 100 is just powered on, the specific application displayed on the application desktop 6-1 may be a default application, for example, "Maps".

A user interface of an application displayed on the application desktop 6-1 is adapted to the application desktop 6-1. A layout resource used by the user interface is updated based on a current split screen ratio, and is different from a layout resource used when the user interface is displayed in full screen. In this way, the user interface of the application displayed on the application desktop 6-1 does not block the DOCK 6-3, so that the user can select to switch to another application in the DOCK 6-3 when using the application.

The layout resource is used to indicate an interface layout, and defines an architecture of a component on the interface. The current split screen ratio mainly indicates a size, for example, a width and a height, of the current application desktop 6-1, and is a basis for updating the layout resource when the electronic device displays the application on the application desktop 6-1.

An application that can be added to the DOCK may support screen splitting. Supporting screen splitting means that the application can use an appropriate layout resource based on the current split screen ratio. The application in the DOCK may have a layout resource configured based on a screen size of the electronic device 100, and a plurality of sets of layout resources adapted to different split screen ratios. The former supports full-screen display of the application, and the latter supports adaptive display of the application on the application desktop in different split screen ratios.

The DOCK is a function interface for displaying application options. Not limited to the DOCK, the function interface for displaying application options may be designed as another style. As shown in an example in FIG. 8, the split-screen combination may further include a card desktop 8-5. A "smart card" may be displayed on the card desktop 8-5, so that the user can quickly switch to an application or a shortcut function by using the "smart card". Certainly, the "smart card" may also be considered as a function interface for displaying application options, and can form a split-screen combination with the application on the application desktop.

Compared with the application desktop, the DOCK and the card desktop occupy a small area, and can be system applications or functions.

In addition to starting screen splitting via the desktop icon, the electronic device 100 may further start screen splitting in another manner. For example, screen splitting is started by using a specific voice instruction "Xiaohua Xiaohua, open 'Smart driving"'. For another example, screen splitting is started by drawing "Z" in front of the screen.

Switch to the application in the DOCK.

As described above, the DOCK in the split-screen combination is not blocked by the application displayed on the application desktop. Therefore, the DOCK may be always visible to the user, so that the user can select an application from the DOCK for application switching.

As shown in FIG. 9A and FIG. 9B, on a split-screen interface, the electronic device 100 may detect a user operation of selecting to open "Music" in the DOCK. In response to this, the electronic device 100 may start "Music", refresh the application desktop, and switch from the user interface of "Maps" to a user interface of "Music" on the application desktop. In this case, the split-screen combination is updated to the split-screen combination including "Music" and the DOCK.

Same as an old application (for example, Maps), a user interface of a new application (for example, Music) displayed on the application desktop is also adapted to the application desktop. A layout resource used by the user interface is updated based on the current split screen ratio, and is different from a layout resource used when the user interface is displayed in full screen. In this way, the user interface of the new application displayed on the application desktop does not block the DOCK, so that the user can select to switch to another application in the DOCK when using the application.

In some embodiments, when the user interface of "Maps" is switched to the user interface of "Music" on the application desktop, "Music" in the DOCK may be switched to "Maps". In this way, the user can more conveniently switch between a plurality of applications.

In embodiments of this application, the DOCK may further provide an entry "More", so that the user can access more applications in the DOCK. The electronic device 100 may detect a user operation of tapping a "More" icon. In response to this, as shown in FIG. 10A and FIG. 10B, the electronic device 100 may start "More", refresh the application desktop, and switch from the user interface of "Music" to a user interface of "More" for display on the application desktop. In this case, the split-screen combination is updated to a split-screen combination including "More" and the DOCK. Herein, "More" may be a desktop application, and may be used to display more applications in the DOCK, for example, "Weather", "Scan to pay", and "Health".

In embodiments of this application, more applications in the DOCK include an application that does not support screen splitting. For example, "Scan to pay" may be an application that does not support screen splitting. The application that does not support screen splitting does not update a layout resource of a to-be-opened application based on the current split screen ratio to be adapted to the application desktop. As a result, the DOCK is blocked because of full-screen display. Therefore, when detecting a user operation of starting the application that does not support screen splitting, for example, a user operation of tapping a "Scan to pay" icon, the electronic device 100 may display a floating bubble 11-2 on a user interface of "Scan to pay" as shown in FIG. 11, so that the user can back, via the floating bubble 11-2, to the split-screen combination including "More" and the DOCK.

Start a recent split-screen combination.

In embodiments of this application, the electronic device 100 may maintain a split-screen configuration, for example, a split-screen combination and a split screen ratio. When subsequently detecting that the user intends to start screen splitting again, the electronic device 100 may notify, based on the stored split-screen configuration, original split-screen applications to use an adapted layout resource based on the original split screen ratio to be adapted to an original split-screen window, and continue to be in the previous split-screen state.

The user may start screen splitting again via the desktop icon, that is, start the recent split-screen combination. The electronic device 100 may alternatively start the recent split-screen combination in another manner. Example are as follows.

### 1. Start the recent split-screen combination via a floating bubble.

As shown in FIG. 12A to FIG. 12D, the recent split-screen combination includes "Maps" and the DOCK. The electronic device 100 may display a floating bubble 12-1 on a current user interface. When detecting a user operation of tapping the floating bubble 12-1, the electronic device 100 may display the recent split-screen combination. In this way, regardless of which interface is currently displayed by the user, the user may back to the recent split-screen combination via the floating bubble 12-1. The floating bubble is displayed on the current user interface, and therefore is always visible to the user.

### 2. Start the recent split-screen combination via a message notification entry.

After the split-screen combination is started, running of the split-screen combination may be displayed in a message notification center, to notify the user that the split-screen combination is running. A user interface of the message notification center may be opened by using a user operation like pulling down a status bar 3-1. The user interface may include message notifications from different applications or services, for example, message notifications such as "You have entered a 'driving scenario'" of Smart driving, "Daily hot topics" of a browser, and "Transaction reminder: You have a..." of a payment application. As shown in FIG. 13A to FIG. 13D, on the user interface of the message notification center, when detecting a user operation of opening a message notification of "Smart driving", the electronic device 100 may start the recent split-screen combination.

An existing entry for starting an application is reused, so that the application switching method provided in embodiments of this application can implement one-tap screen splitting. For example, screen splitting is triggered in a one-tap manner via the desktop icon, the floating bubble, or the message notification center, and the user does not need to first open a split-screen application, and then open the DOCK to select another split-screen application and drag the another split-screen application to the screen, as shown in FIG. 3A to FIG. 3D. In addition, the existing entry for starting an application is reused, so that the entry does not need to be customized at a framework layer. This reduces development work of this part.

During actual application, the electronic device 100 may further provide another entry, so that the user starts the recent split-screen combination. For example, the service is started when a specific voice instruction (for example, "Xiaohua Xiaohua, return to 'the recent split-screen combination'") is detected. This is not limited in this application.

By using the screen splitting technology shown in FIG. 3A to FIG. 3D, once the user opens an application in the split-screen combination after the screen splitting, the split-screen combination is split, and subsequently, the user needs to re-perform the screen splitting procedure shown in FIG. 3A to FIG. 3D on the two applications in the split-screen combination to re-open the split-screen combination. This is not conducive to repeated use of the split-screen combination, and affects application switching efficiency.

However, in embodiments of this application, because the recent split-screen combination and a split screen ratio used for the recent split-screen combination are stored by the electronic device 100, when it is subsequently detected that the user intends to start screen splitting again, for example, taps a desktop icon of "Smart driving", taps a notification of "Smart driving" in the message notification center, or taps a floating bubble of "Smart driving", the electronic device 100 may perform split-screen display on original split-screen applications based on an original split screen ratio, and continue to be in a previous split-screen state. User experience is that even if an application in the split-screen combination is opened after the screen splitting, the split-screen combination is not split, and the previous split-screen combination can still be used, which is more convenient.

For example, as shown in FIG. 14A to FIG. 14E, after the split-screen combination including "Maps" and the DOCK is started, the user taps a desktop icon of "Maps" to open Maps, and the electronic device 100 displays "Maps" in full screen. Then, the user taps a desktop icon of "Smart driving" to intend to start screen splitting again, and the electronic device 100 may redisplay the recent split-screen combination, namely, the split-screen combination including "Maps" and the DOCK. The split-screen combination is not split because "Maps" has been opened in full screen.

During specific implementation, the electronic device 100 may store the split-screen configuration in a process variable of a main interface of "Smart driving". When various entry processes (for example, a desktop application of "Smart driving", the message notification center, and the floating bubble) on the split screen start, the main interface of "Smart driving" is opened, that is, a main interface process is started, and the split-screen configuration stored in the process variable of the main interface process is read. Regardless of which entry manner is used by the user to start screen splitting again, a recently used split screen can be opened.

During specific implementation, when detecting an intent of starting screen splitting, for example, opening the main interface of "Smart driving" via an entry like the desktop application of "Smart driving", the message notification center, and the floating bubble, the electronic device 100 may first determine whether there is the stored split-screen configuration. If there is the stored split-screen configuration, the previous split-screen state may be continued based on the existing split-screen configuration, that is, the recent split-screen combination is opened. If there is no stored split-screen configuration, the recently used application and the DOCK may be used to form a split-screen combination, or when there is no recently used application, a default application and the DOCK are used to form a split-screen combination.

In embodiments of this application, the recent split-screen combination and the split screen ratio used for the recent split-screen combination may alternatively be cleared. Specifically, when detecting that the user exits a user interface process (for example, a main interface process of "Smart driving") used to start a split-screen combination, the electronic device may destroy the user interface process. In this case, a process variable of the process and a split-screen configuration stored in the process are certainly cleared. A user operation of exiting the process may be, for example, an operation of tapping a back button to exit the user interface. This is not limited in this application.

Then, an overall procedure of an application switching method according to an embodiment of this application is described. Details are shown in FIG. 15.

S11: An electronic device 100 starts a split-screen combination.

As described above, the electronic device may start the split-screen combination by starting a main interface process of "Smart driving".

Tapping a desktop icon of "Smart driving", tapping a floating bubble of "Smart driving", and tapping a running notification of "Smart driving" in a message notification center are several example user operations of opening a main interface of "Smart driving". In response to the user operation, the electronic device may start the main interface process of "Smart driving", and the main interface process may transfer a split-screen configuration to a framework layer to trigger the framework layer to start the split-screen combination. The split-screen configuration may be an old split-screen configuration (if any) stored in a process variable, or may be a determined new split-screen configuration.

In this embodiment of this application, the split-screen combination may include a recently used application and a DOCK. In another implementation, the split-screen combination may be a split-screen combination stored in the electronic device 100. In still another implementation, the split-screen combination may include a default application and the DOCK.

During specific implementation, if the electronic device 100 stores an existing split-screen combination, the electronic device 100 may start the existing split-screen combination, so that a user continues to be in a previous split-screen state. The split-screen combination may be a recent split-screen combination. If the electronic device 100 has no existing split-screen combination, an application (which may be referred to as a first application) that forms a split-screen combination together with the DOCK may be a recently opened application, for example, "Music" recently opened in full screen. If the electronic device 100 has neither the existing split-screen combination nor the recently opened application, for example, when the electronic device 100 is just powered on, the first application may be a default application, for example, "Maps".

The first application is displayed without blocking the DOCK. Starting the split-screen combination may specifically include: The electronic device 100 displays a first split-screen window and a second split-screen window on a screen, and the two split-screen windows do not block each other. A user interface of the first application, for example, the foregoing application desktop, is displayed in the first split-screen window, and the DOCK is displayed in the second split-screen window. In addition, the user interface of the first application is adapted to the first split-screen window, because a layout resource used by the first application is determined based on a size of the first split-screen window. Herein, the layout resource may be referred to as a first layout resource. This is not limited thereto. The first application may further have a second layout resource. The layout resource is determined based on a size of the screen, and is used to support full-screen display of the first application. Certainly, the first application may further have a layout resource that is adapted to a window of another size. During actual application, this may be determined based on a product requirement. This is not limited herein.

The first split-screen window may be usually greater than the second split-screen window, and sizes of the first split-screen window and the second split-screen window may be determined based on a split screen ratio.

In an implementation, the split screen ratio may be automatically adapted by the electronic device 100 based on the split-screen combination. For example, if the first application has a heavy interface, the first split-screen window is clearly larger than the second split-screen window. On the contrary, if the first application has a light interface, the first split-screen window is slightly larger than the second split-screen window, or the first split-screen window is equal to the second split-screen window, or even the first split-screen window is smaller than the second split-screen window. Herein, the heavy interface may mean that a large quantity of interface interaction elements need to be presented, for example, Maps needs to display a route, a location, and the like in a large area. Correspondingly, the light interface may mean that a small quantity of interface interaction elements need to be presented, for example, a recording application. During actual application, the electronic device 100 may alternatively determine the split screen ratio based on another policy, for example, based on a historically collected preference of the user for split screen ratios of different split-screen combinations. This is not limited in this application.

In another implementation, the split screen ratio may alternatively be adjusted by the user. For example, the user drags a split line between split-screen windows to adjust sizes of the split-screen windows.

After the split-screen combination is started, the electronic device 100 may store the split-screen configuration, for example, the split-screen combination and the split screen ratio used for the split-screen combination. When subsequently detecting an intent of starting screen splitting, the electronic device 100 may perform, based on the stored split-screen configuration, split-screen display on original split-screen applications based on an original split screen ratio, so that the user continues to be in the previous split-screen state. Herein, performing split-screen display based on the original split screen ratio may mean that a layout resource adapted to the original split screen ratio is used to be adapted to an original split-screen window.

As described above, the DOCK in the split-screen combination is not blocked by the first application displayed in the first split-screen window. Therefore, the DOCK may be always visible to the user, so that the user can select an application from the DOCK for application switching.

S12: The electronic device 100 may detect a user operation of opening a second application in the DOCK, to update the split-screen combination. A new split-screen combination includes the second application and the DOCK.

The second application is displayed without blocking the DOCK. Updating the split-screen combination may include: The electronic device 100 refreshes the first split-screen window, and switches from the user interface of the first application to a user interface of the second application for display. Same as the first application, a user interface of the second application displayed in the first split-screen window may also be adapted to an application desktop, that is, support screen splitting. A layout resource used by the second application is updated based on a current split screen ratio, and is different from a layout resource used when the second application is displayed in full screen. In this way, the user interface of the second application displayed in the first split-screen window does not block the DOCK, so that the user can select to switch to another application in the DOCK when using the second application.

In this embodiment of this application, the second application does not support screen splitting, in other words, the DOCK includes an application that does not support screen splitting. The application that does not support screen splitting does not update a layout resource of a to-be-opened application based on the current split screen ratio to be adapted to the application desktop. As a result, the DOCK is blocked because of full-screen display, and the application does not form a split-screen combination with the DOCK. In this case, the electronic device 100 may display the user interface of the second application in full screen, and display an always visible control like a floating bubble on the user interface, so that the user backs, via the control, to the split-screen combination including the first application and the DOCK.

Further, the application switching method provided in embodiments of this application is described in detail with reference to the internal interaction procedures of the electronic device 100 shown in FIG. 16A to FIG. 17B. A screen size of the electronic device 100 is, for example, 2700*1224 pixels.

FIG. 16A and FIG. 16B show an internal implementation procedure of switching from a first application to a second application. As shown in FIG. 16A and FIG. 16B, the procedure may include the following steps.

S21: An operating system may detect that a user taps a desktop icon of the first application. Herein, the operating system may mainly refer to a system desktop that is responsible for monitoring a desktop icon. The user operation is used to open the first application, and is not limited thereto. The operation of opening the first application may alternatively be a user operation in another form, for example, a voice instruction or a gesture instruction.

S22 and S23: The operating system may start the first application.

S24: The operating system may notify the first application of a full-screen configuration. The full-screen configuration may mainly refer to the screen size. For example, a width of a screen is 1224 pixels, and a height of the screen is 2700 pixels.

S25: The first application may obtain a layout resource adapted to a full screen, to support full-screen display of the first application. The first application may have the layout resource adapted to the full screen, or the first application may access the layout resource that is adapted to the full screen and that is stored on a server or another device.

S26: The operating system may display a user interface of the first application in full screen based on the layout resource adapted to the full screen.

In this case, the electronic device 100 completes work of opening the first application in full screen.

Next, in response to a user intent of starting screen splitting, the electronic device 100 may display a split-screen combination: the first application and a DOCK. It is assumed that a prerequisite is that the electronic device does not have a stored split-screen configuration, and the split-screen combination needs to be constructed.

S27: The operating system may detect that the user taps a desktop icon of "Smart driving".

S28 and S29: The operating system may start a main interface process of "Smart driving".

S30: The main interface process of "Smart driving" may determine the split-screen combination.

As described above, because there is no existing split-screen configuration, and there is a recently used application, the split-screen combination may include the recently used application and the DOCK.

After the split-screen combination is determined, the operating system may further start an application that forms the split-screen combination, for example, the first application and the DOCK. Certainly, if the first application and the DOCK have been started, the first application and the DOCK do not need to be started again.

S31: The main interface process of "Smart driving" may further determine a split screen ratio.

As described above, a first split-screen window may be usually greater than a second split-screen window, and sizes of the first split-screen window and the second split-screen window may be determined based on the split screen ratio. The split screen ratio may be automatically adapted based on the split-screen combination. For example, if the first application has a heavy interface, the first split-screen window is clearly larger than the second split-screen window. On the contrary, if the first application has a light interface, the first split-screen window is slightly larger than the second split-screen window, or the first split-screen window is equal to the second split-screen window, or even the first split-screen window is smaller than the second split-screen window. The split screen ratio may alternatively be adjusted by the user. For example, the user drags a split line between split-screen windows to adjust sizes of the split-screen windows.

S32: The main interface process of "Smart driving" may transfer, to the operating system, the previously determined split-screen configuration, including the split-screen combination and the split screen ratio. For example, the split-screen combination is a combination including the first application and the DOCK, and the split screen ratio is 3:1.

During specific implementation, the main interface process of "Smart driving" may transfer the split-screen configuration to a framework layer of the operating system via an intent (intent), to trigger the framework layer to start screen splitting. First, the main interface process of "Smart driving" may write the split-screen configuration into the intent, and a used interface may be, for example, "intent.putextra ()". Then, the framework layer may read a parameter in the intent when invoking the intent. In this way, the split-screen configuration is transferred via the intent.

S33: The main interface process of "Smart driving" may store the split-screen configuration, for example, store the split-screen configuration in a process variable.

S34: After obtaining the split screen ratio, the operating system may send a screen configuration update notification to the first application, to notify the first application of the split screen ratio, so that the first application learns of the size of the first split-screen window.

In the following, the split screen ratio may be, for example, first split-screen window: second split-screen window=3:1.

S35: The first application may return, to the operating system, a first layout resource adapted to the split screen ratio.

An example in which the split screen ratio is 3:1 is used for description. The size of the first split-screen window may be calculated as follows: Width=1224*(3/4), and height=2700*(3/4). In this case, the first layout resource is adapted to the width and height, so that the user interface of the first application can be adapted to the first split-screen window for display, and does not exceed the first split-screen window to block the DOCK.

Certainly, a prerequisite of this step is that the first application supports screen splitting, that is, the first application has the first layout resource or can access the first layout resource stored on the server or another device, or has a capability of temporarily generating the first layout resource.

S36: After determining the split screen ratio, the operating system may also send the screen configuration update notification to the DOCK, to notify the DOCK of the split screen ratio, so that the DOCK learns of the size of the second split-screen window.

S37: The DOCK may return, to the operating system, a second layout resource adapted to the split screen ratio.

The DOCK may be a system function or an application that supports screen splitting.

Similarly, an example in which the split screen ratio is 3:1 is used for description. The size of the second split-screen window may be calculated as follows: Width=1224*(3/4), and height=2700*(3/4). In this case, the second layout resource is adapted to the width and height, so that a user interface of the DOCK can be adapted to the second split-screen window for display.

S38: The operating system may display the first application and the DOCK on split screens.

Specifically, the operating system may display the first application in the first split-screen window based on the first layout resource, and display the DOCK in the second split-screen window based on the second layout resource.

In this case, the electronic device 100 completes starting the split-screen combination.

Next, in response to a user operation of switching to an application, the electronic device 100 may update the split-screen combination, and switch from the user interface of the first application to a user interface of the second application in the first split-screen window for display. In other words, the split-screen combination is updated to a split-screen combination including the second application and the DOCK.

S39: The operating system may detect that the user taps the second application in the DOCK. The user operation is used to switch to the second application.

S40 and S41: The operating system may start the second application.

S42: The main interface process of "Smart driving" may further transfer a split-screen configuration to the operating system. In this case, the split-screen configuration is changed relative to the previous split-screen configuration, and may be referred to as a new split-screen configuration, where a split-screen combination is changed.

S43: The operating system may send the screen configuration update notification to the second application, to notify the second application of the split screen ratio, so that the second application learns of the size of the first split-screen window.

If the split screen ratio is not changed by the user, the split screen ratio is still 3:1.

S44: The second application may return, to the operating system, a third layout resource adapted to the split screen ratio.

The third layout resource is adapted to the width and height, so that the user interface of the second application can be adapted to the second split-screen window for display, and does not exceed the second split-screen window to block the DOCK.

Certainly, a prerequisite of this step is that the second application supports screen splitting.

S45: The operating system may display the second application and the DOCK on split screens.

Specifically, the operating system may switch from the user interface of the first application to the user interface of the second application in the first split-screen window for display, to update the split-screen combination.

It can be learned that, according to the method provided in embodiments of this application, the user interface of the first application or the user interface of the second application can be normally displayed, and it is further ensured that the DOCK is resident on the screen for display, so that the user can select another application from the DOCK at any time for switching. This is easy to operate and efficient to use.

FIG. 17A and FIG. 17B show an internal implementation procedure of starting a recent split-screen combination. As shown in FIG. 17A and FIG. 17B, the procedure may include the following steps.

As shown in S51 and S52, the recent split-screen combination is a combination including a first application and a DOCK, and a split screen ratio used in the combination is 3:1. A prerequisite for steps S51 and S52 to pave a subsequent procedure is as follows: There is a recent split-screen combination, an existing split-screen configuration exists in an electronic device, and the recent split-screen combination can be started.

S53: An operating system may detect that a user taps a desktop icon of the first application.

S54: The operating system may notify the first application of a full-screen configuration. The full-screen configuration may mainly refer to the screen size. For example, a width of a screen is 1224 pixels, and a height of the screen is 2700 pixels.

S55: The first application may obtain a layout resource adapted to a full screen, to support full-screen display of the first application.

S56: The operating system may display a user interface of the first application in full screen based on the layout resource adapted to the full screen.

In this case, the electronic device 100 opens the first application in full screen.

Next, in response to a user intent of starting screen splitting, the electronic device 100 may start the recent split-screen combination.

S57: The operating system may detect that the user taps a desktop icon of "Smart driving".

Tapping the desktop icon of "Smart driving" is a user operation of opening a main interface of "Smart driving".

S58 and S59: In response to the user operation, the electronic device may start a main interface process of "Smart driving".

S60: The main interface process of "Smart driving" may read a split-screen configuration stored in a process variable, and transfer the split-screen configuration to a framework layer, to trigger the framework layer to start screen splitting.

The transferred split-screen configuration is the old split-screen configuration stored in S51.

S61: The main interface process of "Smart driving" may send the existing split-screen configuration to the operating system (which may be specifically an application framework layer). The stored split-screen configuration includes the recent split-screen combination and a split screen ratio used for the recent split-screen combination.

During specific implementation, the main interface process of "Smart driving" may transfer the existing split-screen configuration to the application framework layer via an intent (intent).

S62: The operating system may send a screen configuration update notification to the first application, to notify the first application of the split screen ratio, so that the first application learns of a size of a first split-screen window.

The first application is an application that forms the recent split-screen combination with the DOCK. An existing split screen ratio is the split screen ratio used for the recent split-screen combination.

S63: The first application may return, to the operating system, a fourth layout resource adapted to the existing split screen ratio.

S64: The operating system may also send the screen configuration update notification to the DOCK, to notify the DOCK of the split screen ratio, so that the DOCK learns of a size of a second split-screen window.

S65: The DOCK may return, to the operating system, a fifth layout resource adapted to the existing split screen ratio.

S66: The operating system may display the first application and the DOCK on split screens.

Specifically, the operating system may display the first application in the first split-screen window based on the fourth layout resource, and display the DOCK in the second split-screen window based on the fifth layout resource. The fourth layout resource and the fifth layout resource are the same as layout resources used when the electronic device displays the first application and the DOCK in step S51.

In this case, the electronic device 100 starts the recent split-screen combination.

It can be learned that the method provided in embodiments of this application may support starting the recent split-screen combination, to continue to be in a previous split-screen state. User experience is that even if an application in the split-screen combination is opened after the screen splitting, the split-screen combination is not split, and the previous split-screen combination can still be used, which is more convenient.

Methods or algorithm steps described in combination with the content disclosed in embodiments of this application may be implemented by hardware, or may be implemented by a processor by executing a software instruction. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a transceiver or a relay device. Certainly, the processor and the storage medium may alternatively exist in a wireless access network device or user equipment as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

## Claims

1. An application switching method, comprising:
detecting, by an electronic device, a user operation of opening a third application;
displaying, by the electronic device, a first split-screen combination on a screen, wherein the first split-screen combination comprises a first application and a dock bar DOCK, the first application is displayed in a first split-screen window, the DOCK is displayed in a second split-screen window, the first split-screen window and the second split-screen window do not block each other, and the DOCK comprises a plurality of applications;
detecting, by the electronic device, a user operation of opening the first application by a user;
displaying, by the electronic device, the first application in full screen on the screen;
detecting, by the electronic device, the user operation of opening the third application again; and
displaying, by the electronic device, the first split-screen combination on the screen again.

2. The method according to claim 1, wherein when the electronic device displays the first split-screen combination on the screen, the method further comprises: storing, by the electronic device, the first split-screen combination as a recent split-screen combination.

3. The method according to claim 1 or 2, wherein the method further comprises:
detecting, by the electronic device, a user operation of opening a second application in the DOCK; and
displaying, by the electronic device, a user interface of the second application in the first split-screen window.

4. The method according to claim 3, wherein when the electronic device displays the user interface of the second application in the first split-screen window, the method further comprises: storing, by the electronic device, a second split-screen combination as the recent split-screen combination, wherein the second split-screen combination comprises the second application and the DOCK.

5. The method according to claim 2 or 4, wherein the storing further comprises: storing a split screen ratio used for the recent split-screen combination.

6. The method according to any one of claims 1 to 5, wherein when the electronic device detects the user operation of opening the third application, the first application is a recently used application, and the recent split-screen combination is not stored in the electronic device.

7. The method according to any one of claims 1 to 6, wherein when the electronic device detects the user operation of opening the third application again, the first application is not the recently used application.

8. The method according to claim 7, wherein the first application is not the recently used application, and the method specifically comprises: after the electronic device displays the first application in full screen on the screen, and before the electronic device detects the user operation of opening the third application again, further displaying, by the electronic device, the fourth application in full screen on the screen.

9. The method according to any one of claims 1 to 8, wherein the first application has a first layout resource and a second layout resource, the first layout resource is configured based on a size of the first split-screen window, and the second layout resource is configured based on a size of the screen.

10. The method according to claim 9, wherein when the first application is displayed in the first split-screen window, a layout resource used by the first application is the first layout resource.

11. The method according to claim 9 or 10, wherein when the first application is displayed in full screen on the screen, the layout resource used by the first application is the second layout resource.

12. The method according to claim 3 or 4, wherein the second application also has a layout resource configured based on the first split-screen window.

13. The method according to any one of claims 1 to 12, wherein the user operation of opening the third application comprises: tapping a desktop icon of the third application, tapping a floating bubble of the third application displayed on the screen, or tapping a notification in a message notification center indicating that the third application is running.

14. The method according to any one of claims 1 to 13, wherein displaying, by the electronic device, the first split-screen combination on the screen specifically comprises:
transferring, by the third application to the application framework layer, the first split-screen combination and a split screen ratio used for the first split-screen combination;
forming, by the application framework layer, a split screen based on the split screen ratio used for the first split-screen combination, and sending a first screen configuration update notification to the first application in the first split-screen combination, wherein the first screen configuration update notification carries the size of the first split-screen window;
feeding back, by the first application, the first layout resource to the application framework layer based on the first screen configuration update notification, wherein the first layout resource is a layout resource obtained based on the size of the first split-screen window, and is different from the second layout resource used when the first application is displayed in full screen; and
displaying, by the application framework layer, a user interface of the first application in the first split-screen window based on the first layout resource.

15. The method according to claim 5, wherein the storing specifically comprises: storing in a process variable of the third application.

16. The method according to claim 15, wherein the electronic device comprises an application framework layer, and displaying, by the electronic device, the first split-screen combination on the screen again specifically comprises:
reading, by the third application from the process variable, the stored recent split-screen combination and the split screen ratio used for the recent split-screen combination;
transferring, by the third application, the recent split-screen combination and the split screen ratio to the application framework layer;
forming, by the application framework layer, a split screen based on the split screen ratio, and sending a second screen configuration update notification to the first application in the recent split-screen combination, wherein the second screen configuration update notification carries a size of the first split-screen window;
feeding back, by the first application, a first layout resource to the application framework layer based on the second screen configuration update notification, wherein the first layout resource is a layout resource obtained based on the size of the first split-screen window, and is different from a second layout resource used when the first application is displayed in full screen; and
displaying, by the application framework layer, a user interface of the first application in the first split-screen window based on the first layout resource.

17. The method according to any one of claims 1 to 16, wherein the DOCK comprises a fifth application that does not support screen splitting, and that screen splitting is not supported means that the fifth application does not have the layout resource configured based on the first split-screen window; and
the method further comprises:
detecting, by the electronic device, a user operation of opening the fifth application in the DOCK;
displaying, by the electronic device, a user interface of the fifth application in full screen on the screen;
further displaying, by the electronic device, the floating bubble of the third application on the screen;
detecting, by the electronic device, a user operation of tapping the floating bubble; and
displaying, by the electronic device, the recent split-screen combination on the screen.

18. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 17 is performed.

19. A chip system, wherein the chip system is used in an electronic device, the chip system comprises one or more processors, and the processor is configured to invoke computer instructions, so that the method according to any one of claims 1 to 17 is performed.

20. A computer-readable storage medium, comprising instructions, wherein when the instructions are run on an electronic device, the method according to any one of claims 1 to 17 is performed.
